# EUROPEAN PATENT SPECIFICATION

(11) **EP 3 217 293 B1**
(45) Date of publication and mention of the grant of the patent: **08.05.2019**
(21) Application number: 14905559.2
(22) Date of filing: 07.11.2014
(51) Int. Cl.: G06F 17/30, G09C 1/00

(54) **METHOD FOR RETRIEVING ENCRYPTED GRAPH, SYSTEM FOR RETRIEVING ENCRYPTED GRAPH, AND COMPUTER**
VERFAHREN ZUM ABRUFEN EINER VERSCHLÜSSELTEN GRAFIK, SYSTEM ZUM ABRUFEN EINER VERSCHLÜSSELTEN GRAFIK UND COMPUTER
PROCÉDÉ ET SYSTÈME DE RÉCUPÉRATION DE GRAPHE CRYPTÉ ET ORDINATEUR

(43) Date of publication of application: 13.09.2017
(73) Proprietor: Hitachi, Ltd., Tokyo 100-8280 (JP)
(72) Inventor: NAGANUMA, Ken, Tokyo 100-8280 (JP); SATOU, Yoshinori, Tokyo 100-8280 (JP); SATO, Hisayoshi, Tokyo 100-8280 (JP); YOSHINO, Masayuki, Tokyo 100-8280 (JP); KIDO, Kunihiko, Tokyo 100-8280 (JP)
(74) Representative: MERH-IP Matias Erny Reichl Hoffmann Patentanwälte PartG mbB
(86) International application number: PCT/JP2014/079615
(87) International publication number: WO 2016/072022

(56) References cited:
- JP-A- 2008 501 175
- JP-A- 2012 123 614
- JP-A- 2014 052 863
- US-A1- 2011 138 190
- NING CAO ET AL: "Privacy-Preserving Query over Encrypted Graph-Structured Data in Cloud Computing", DISTRIBUTED COMPUTING SYSTEMS (ICDCS), 2011 31ST INTERNATIONAL CONFERENCE ON, IEEE, 20 June 2011 (2011-06-20), pages 393-402, XP031904029, DOI: 10.1109/ICDCS.2011.84 ISBN: 978-1-61284-384-1
- DAN BONEH ET AL: "Conjunctive, Subset, and Range Queries on Encrypted Data", 21 February 2007 (2007-02-21), THEORY OF CRYPTOGRAPHY; [LECTURE NOTES IN COMPUTER SCIENCE;;LNCS], SPRINGER BERLIN HEIDELBERG, BERLIN, HEIDELBERG, PAGE(S) 535 - 554, XP047030282, ISBN: 978-3-540-70935-0 * abstract * * page 535 - page 536 *
- MING LI ET AL: "Toward privacy-assured and searchable cloud data storage services", IEEE NETWORK, IEEE SERVICE CENTER, NEW YORK, NY, US, vol. 27, no. 4, 1 July 2013 (2013-07-01), XP011522539, ISSN: 0890-8044, DOI: 10.1109/MNET.2013.6574666

## Description

### BACKGROUND

This invention relates to a technology for searching encrypted graph structure data as it is in its encrypted state without decrypting the encrypted graph structure data.

In recent years, big data businesses for collecting, storing, and analyzing a large volume of data to extract valuable knowledge therefrom have become widespread. In particular, for example, in order to analyze content on social networks, a large volume of graph structure data is stored in a database for the analysis.

However, a related-art relational database has a problem of requiring a large amount of calculation resources for handling the graph structure data during the execution of processing for extracting all nodes adjacent to a specific node or retrieval involving a large amount of joining processing for searching paths between a specific node and another node. Therefore, a graph database dedicated to such processing has attracted attention.

Meanwhile, large-capacity storage devices, high-speed CPUs, and a system for distributively controlling the storage devices and the CPUs are required for handling a large volume of data, and hence the use of external resources including a cloud is under consideration. However, a security problem occurs when a user using a cloud service stores data in an external organization. Therefore, a secret information processing technology for outsourcing data after subjecting the data to encryption processing and executing retrieval or other such processing on the data as it is in its encrypted state has attracted attention (see, for example, JP 2012-123614 A, ADVANCED ENCRYPTION STANDARD (AES), [online], November 26, 2001, Federal Information Processing Standards Publication 197, [retrieved on <http://csrc.nist.gov/publications/fips/fips197/fips-197.pdf>, and Secure Hash Standard (SHS), [online], March 2012, FEDERAL INFORMATION PROCESSING STANDARDS PUBLICATION 180-4, [retrieved on October 2, 2014], Internet <http://csrc.nist.gov/publications/fips/fips180-4/fips-180-4.pdf>). Non patent document "Privacy-Preserving Query over Encrypted Graph-Structured Data in Cloud Computing" (2011, 31st International Conference on Distributed Computing Systems) deals with the problem of preserving privacy when querying encrypted graph data.

### SUMMARY

In order to solve the above-mentioned security problem that occurs in the outsourcing of data, for example, in JP 2012-123614 A, there is proposed an encryption retrieval processing system for executing retrieval as follows. That is, data is encrypted and then outsourced to a cloud or the like. Subsequently, a computer being used by a user transmits an encrypted retrieval query to the cloud. On the cloud side, the data is searched as it is in its encrypted state.

Only the encrypted data is transmitted to the cloud side without showing its plaintext data, which can solve the above-mentioned problem in terms of privacy. In the invention of JP 2012-123614 A, there is described a method of encrypting respective cells of table-type data and further searching the respective cells as they are in the encrypted state of the data.

When data to be encrypted is data including a graph structure, in order to execute the retrieval involving traverse processing, which is specific to the graph structure, for searching paths between a specific node (start point) and another node (end point) as described above, an encryption query for retrieving an intermediate node existing on the path is required in addition to an encryption query for retrieving the start point node and the end point node. Each time the intermediate node is identified during the traverse processing, the cloud needs to request the user to generate and transmit the encryption queries of those nodes, which raises a problem in that a large amount of communications and calculation resources are required.

Therefore, this invention has an object to reduce a load required for retrieval processing for data including an encrypted graph structure.

A representative aspect of the present disclosure is as follows. A method of retrieving an encrypted graph, which allows a first computer comprising a processor and a memory to generate an encrypted graph by encrypting a graph including a start point, an edge, and an end point, and allows a second computer comprising a processor and a memory to retrieve the encrypted graph, the method comprising: a first step of generating, by the first computer, a secret key through use of a secret key generating function of a searchable encryption algorithm set in advance; a second step of generating, by the first computer, the encrypted graph by encrypting the graph through use of an encryption function of the searchable encryption algorithm; a third step of generating, by the first computer, an encryption query by encrypting a query for retrieving the graph through use of a searchable encryption query function of the searchable encryption algorithm; a fourth step of transmitting, by the first computer, encrypted graph data obtained by associating the encrypted graph with the encryption query for each edge of the graph to the second computer; a fifth step of transmitting, by the first computer, a searchable encryption matching function of the searchable encryption algorithm to the second computer; a sixth step of receiving and storing, by the second computer, the encrypted graph data and the searchable encryption matching function; a seventh step of generating, by the first computer, an encrypted graph retrieval query by encrypting the start point and the end point of the graph to be retrieved through the use of the searchable encryption query function, and transmitting the encrypted graph retrieval query to the second computer; an eighth step of receiving, by the second computer, the encrypted graph retrieval query, and executing retrieval processing through use of the searchable encryption matching function with the encrypted graph retrieval query and the encrypted graph data being used as input; and a ninth step of transmitting, by the second computer, a result of the retrieval processing to the first computer.

According to this invention, it is possible to execute the retrieval processing specific to the graph data while ensuring security of the graph data entrusted to a computer system.

### BRIEF DESCRIPTION OF THE DRAWINGS

FIG. 1 is a block diagram for illustrating an example of a system for retrieving an encrypted graph according to a first embodiment of this invention.
FIG. 2A is a block diagram for illustrating an example of the user terminal according to the first embodiment of this invention.
FIG. 2B is a block diagram for illustrating an example of the database server according to the first embodiment of this invention.
FIG. 3 is a diagram for illustrating an example of the graph data according to the first embodiment of this invention.
FIG. 4 is a table for showing an example of plaintext graph data according to the first embodiment of this invention.
FIG. 5 is a table for showing an example of encrypted graph data according to the first embodiment of this invention.
FIG. 6 is an example of a data format of encrypted graph retrieval query data according to the first embodiment of this invention.
FIG. 7 is a sequence diagram for illustrating an example of prestorage processing for the encrypted graph according to the first embodiment of this invention.
FIG. 8 is a sequence diagram for illustrating an example of encrypted graph retrieval processing according to the first embodiment of this invention.
FIG. 9 is the first half of a flowchart for illustrating an example of the retrieval processing for the encrypted graph data according to the first embodiment of this invention.
FIG. 10 is the second half of the flowchart for illustrating the example of the retrieval processing for the encrypted graph data according to the first embodiment of this invention.
FIG. 11 is a table obtained by encrypting each cell of the table of FIG. 4 through the use of the searchable cipher.
FIG. 12 is the table obtained by decrypting each cell of the table of FIG. 11 through use of the encryption queries Query 1 and Query2.
FIG. 13 is a diagram for illustrating an example of tree data for the retrieval of the shortest path according to the first embodiment of this invention.
FIG. 14 is a table for showing an example of a result of the retrieval of the shortest path according to the first embodiment of this invention.
FIG. 15 is a block diagram for illustrating an example of a system for retrieving an encrypted graph according to a second embodiment of this invention.
FIG. 16 is a sequence diagram for illustrating an example of prestorage processing for the encrypted data according to the second embodiment of this invention.
FIG. 17 is a sequence diagram for illustrating an example of encrypted graph retrieval processing according to the second embodiment of this invention.
FIG. 18 is a block diagram for illustrating an example of a system for retrieving an encrypted graph according to a third embodiment of this invention.
FIG. 19 is a sequence diagram for illustrating an example of prestorage processing for the encrypted graph data according to the third embodiment of this invention.
FIG. 20 is a flowchart for illustrating an example of encrypted graph retrieval processing according to the third embodiment of this invention.
FIG. 21 is a table for showing a data format of the encrypted graph data of a fourth embodiment of this invention.

### DETAILED DESCRIPTION OF THE PREFERRED EMBODIMENTS

Now, a first embodiment of this invention is described in detail with reference to the accompanying drawings. In the first embodiment, a description is made of an example of retrieval involving traverse processing for a graph to be conducted for graph data encrypted through use of a searchable cipher. As the traverse processing for the graph, processing for setting a specific vertex node as a start point and causing a user terminal to send a query to a database server about whether or not a path including a length equal to or smaller than *n* with another vertex node being set as an end point exists in the graph data is exemplified. It is assumed that the value of the maximum value (or threshold value) *n* of the length of the path to be retrieved is set in advance.

The terms used in the first embodiment are defined as follows.
1. Traverse processing for graph data. The traverse processing for graph data represents processing for retrieving a specific vertex node from data including a graph structure, further retrieving a node adjacent to the vertex node, and further retrieving a node adjacent to the above-mentioned adjacent node, that is, processing for repeatedly retrieving a node adjacent to a specific node and another node further adjacent to the above-mentioned adjacent node.
2. Common key searchable encryption algorithm. The common key searchable encryption algorithm (hereinafter referred to as "searchable encryption algorithm") collectively represents not only a common key encrypting (searchable encrypting) function of conducting normal probabilistic encryption and decryption but also encryption capable of conducting matching determination (hereinafter referred to as "matching processing") for a plaintext as it is in its encrypted state without decrypting the plaintext. It is only an entity (in the first embodiment, user terminal) including a secret key that can execute the encryption, the decryption, and the generation of an encryption retrieval query to be used for retrieval.

The matching processing between a ciphertext and an encryption query can be conducted by an entity (in the first embodiment, database server) including a search key. More specifically, the searchable encryption algorithm includes the following four function groups [searchable encryption secret key generating function, searchable encryption encrypting function, searchable encryption query function, searchable encryption matching function].
(1) The searchable encryption secret key generating function (secret key generating function) represents a secret key generation algorithm defined by the searchable encryption algorithm, which is hereinafter referred to as "secret key generation processing". A security parameter and a key seed are set as function input, and a binary string including a specific bit length and corresponding to the secret key set as function input in the following items (2) and (3) and the search key set as function input in the following item (4) is set as output.
(2) The searchable encryption encrypting function (encryption function) represents a probabilistic encryption algorithm defined by the searchable encryption algorithm. The ciphertext is output with the plaintext and the secret key being used as the function input.
(3) The searchable encryption query function represents a probabilistic query generation algorithm defined by the searchable encryption algorithm. The encryption query is output with a plaintext query and the secret key being used as the function input.
(4) The searchable encryption matching function represents a matching algorithm between the ciphertext and the encryption query, which is defined by the searchable encryption algorithm. With a ciphertext argument, an encryption query argument, and the search key being used as the function input, [plaintext matched] is output as a result when the plaintext corresponding to the ciphertext and the plaintext relating to the encryption query match each other, and otherwise, [plaintext mismatched] is output as a result. In the first embodiment, the encrypted graph and the encryption query are input to the searchable encryption matching function as the ciphertexts, and the encrypted graph from which [plaintext matched] has been output becomes a retrieval result of the encryption query.

The first embodiment is described below by fixing one searchable encryption algorithm, that is, by fixing the searchable encryption secret key generating function, the searchable encryption encrypting function, the searchable encryption query function, and the searchable encryption matching function. As a specific searchable encryption method algorithm, such a publicly-known or well-known technology as disclosed in JP 2012-123614 A may be employed.

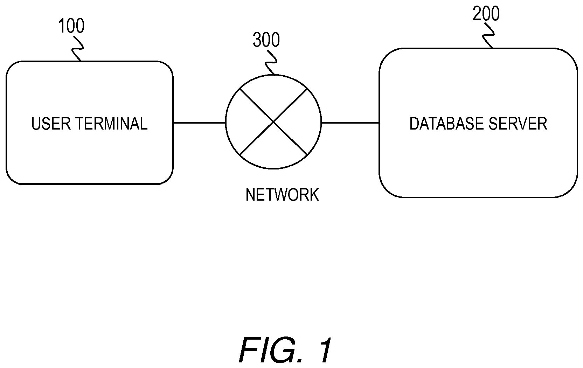

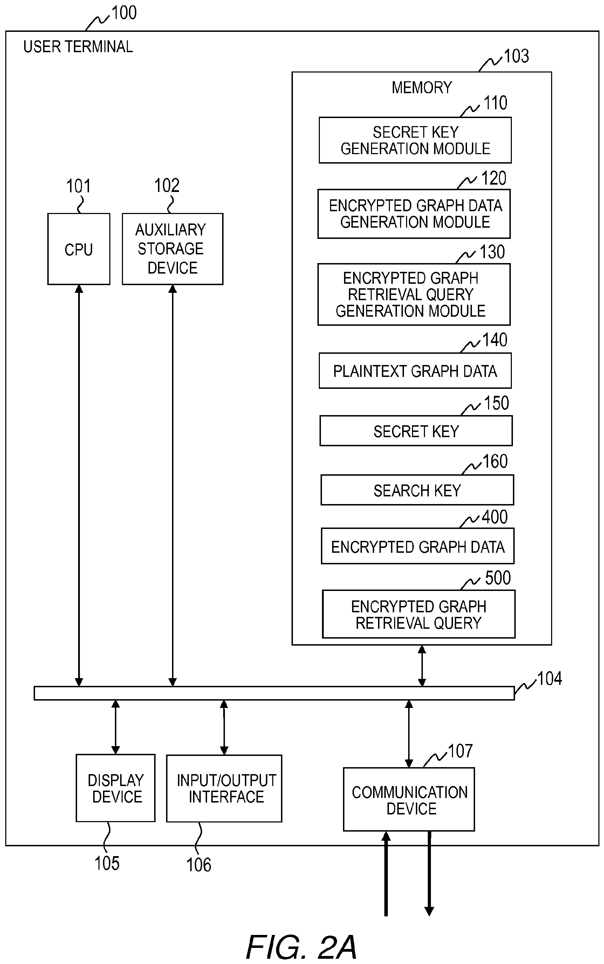

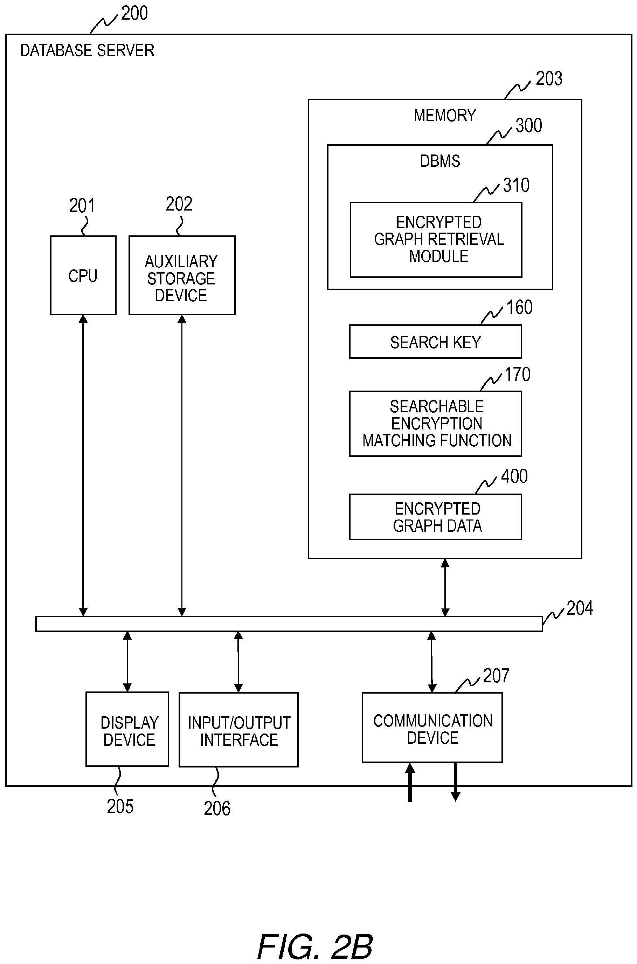

Now, with reference to FIG. 1 and FIG. 2, a configuration of a system according to the first embodiment is described.

FIG. 1 is a block diagram for illustrating an example of a system for retrieving an encrypted graph according to the first embodiment. As illustrated in FIG. 1, the system for retrieving the encrypted graph is configured to allow a user terminal 100 and a database server 200 to transmit and receive information to/from each other through a network 300.

FIG. 2A is a block diagram for illustrating an example of the user terminal 100. As illustrated in FIG. 2A, the user terminal 100 is a computer including a CPU 101, an auxiliary storage device 102, a memory 103, a display device 105, an input/output interface 106, and a communication device 107, which are coupled to one another through an internal signal line 104.

The auxiliary storage device 102 is configured to store program codes. The program codes are loaded into the memory 103 and executed by the CPU 101.

FIG. 2A is an illustration of a state in which the respective program codes and data have been loaded into the memory 103.

The memory 103 is configured to store a secret key generation module 110 configured to generate a secret key 150 and a search key 160, an encrypted graph data generation module 120 configured to generate encrypted graph data 400 by encrypting plaintext (non-ciphertext) graph data 140, and an encrypted graph retrieval query generation module 130 configured to generate an encrypted graph retrieval query 500 for searching the encrypted graph data 400.

The respective functional modules of the secret key generation module 110, the encrypted graph data generation module 120, and the encrypted graph retrieval query generation module 130 are loaded into the memory 103 as the program codes.

The CPU 101 is configured to perform processing based on a program of each of the functional modules, to thereby operate as the functional module configured to provide a predetermined function. For example, the CPU 101 is configured to perform processing based on a secret key generation program, to thereby function as the secret key generation module 110. The same applies to the other program codes. The CPU 101 further operates as the functional module configured to provide the function of each of a plurality of pieces of processing executed by each program. The computer and a computer system represent a device and a system, respectively, including those functional modules.

Information including programs and tables for implementing the respective functional modules of the user terminal 100 can be stored in: a storage device, for example, the auxiliary storage device 102, a nonvolatile semiconductor memory, a hard disk drive, or a solid state drive (SSD); or a computer-readable non-transitory data storage medium, for example, an IC card, an SD card, or a DVD.

The secret key generation module 110 is configured to generate the secret key 150 and the search key 160 based on the searchable encryption secret key generating function described above in the item (1).

The encrypted graph data generation module 120 is configured to generate the encrypted graph data 400 as the ciphertext from the secret key 150 and the plaintext graph data 140 through use of the searchable encryption encrypting function described above in the item (2).

The encrypted graph retrieval query generation module 130 is configured to generate an encryption query from the secret key 150 and a plaintext graph through use of the searchable encryption query function described above in the item (3), and to set the encryption query in the encrypted graph data 400 as described later. The encrypted graph retrieval query generation module 130 is further configured to transmit in advance the searchable encryption matching function described above in the item (4) and the search key 160 to the database server 200.

FIG. 2B is a block diagram for illustrating an example of the database server 200. As illustrated in FIG. 2B, the database server 200 is a computer including a CPU 201, an auxiliary storage device 202, a memory 203, a display device 205, an input/output interface 206, and a communication device 207, which are coupled to one another through an internal signal line 204.

The auxiliary storage device 202 is configured to store programs. The programs are loaded into the memory 103 and executed by the CPU 201.

The memory 203 is configured to store a database management system (hereinafter referred to as "DBMS") 300 including an encrypted graph retrieval module 310, the encrypted graph data 400 distributed from the user terminal 100, the search key 160, and a searchable encryption matching function 170.

The respective functional modules of the DBMS 300 are loaded into the memory 203 as programs. In the same manner as the user terminal 100, the CPU 201 is configured to perform processing based on the program of each of the functional modules, to thereby operate as the functional module configured to provide a predetermined function.

As described later, the DBMS 300 is configured to receive an encrypted graph retrieval query from the user terminal 100, causes the encrypted graph retrieval module 310 to search the encrypted graph data 400, and returns a retrieval result to the user terminal 100.

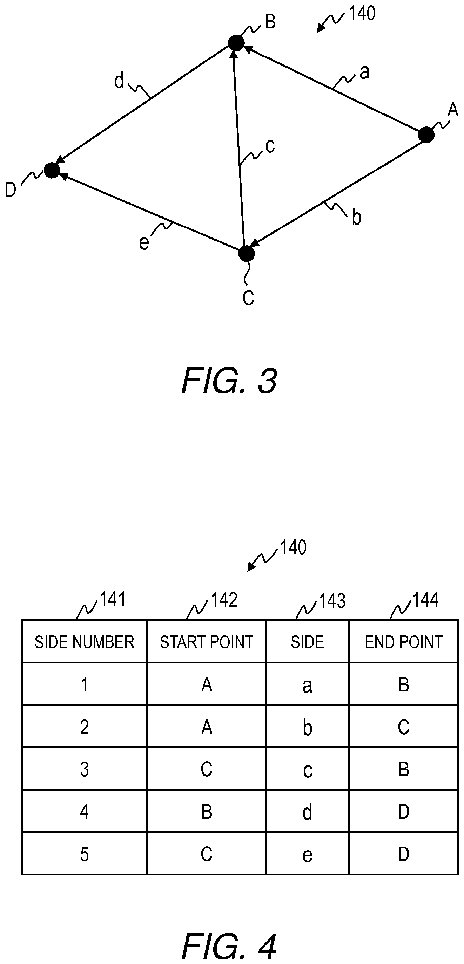

Now, with reference to FIG. 3 to FIG. 6, a description is made of a format of data to be handled in the system for retrieving the encrypted graph according to the first embodiment.

FIG. 3 is a diagram for illustrating an example of the graph data. FIG. 4 is a table for showing an example of plaintext graph data.

The plaintext graph data 140 of the first embodiment is formed of directed graph data. The plaintext graph data 140 is expressed by a table formed of fields of an edge number 141, a start point 142, an edge 143, and an end point 144 as shown in FIG. 4. In the following embodiments, all the graphs are assumed to be directed graphs including a direction from the start point 142 toward the end point 144, which are hereinafter referred to simply as "graphs".

In FIG. 3, the plaintext graph data 140 is formed of a set *V*={*A,B,C,D*} of vertex nodes and a set *E*={*a,b,c,d,e*} of edges, and each of the edges has any one of the vertex nodes as the start point or the end point.

For example, an edge *a* has a vertex node *A* as the start point and a vertex node *B* as the end point. As shown in FIG. 4, the plaintext graph data 140 is handled as a table-type data format including four pieces of data of the edge number 141, the start point 142, the edge 143, and the end point 144 in one row.

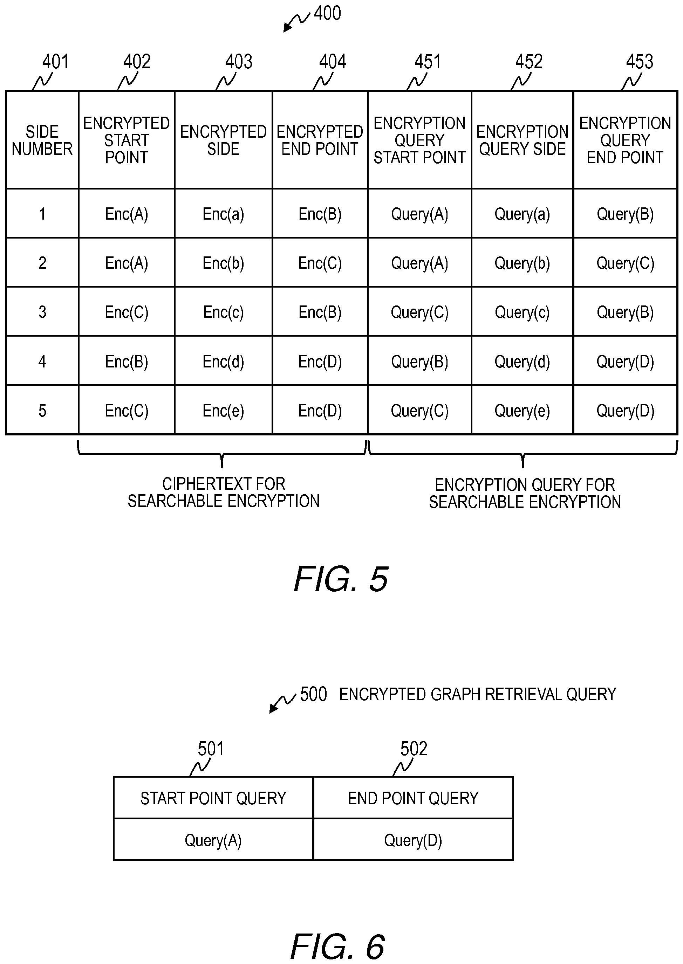

FIG. 5 is a table for showing an example of encrypted graph data. FIG. 5 is an example of a data format of the encrypted graph data 400 including a combination of the encrypted graph obtained by encrypting the plaintext graph data 140 of FIG. 4 and the encryption query for retrieving the encrypted graph.

As shown in FIG. 5, the encrypted graph data 400 has the edge number 141 of the plaintext graph data 140 set as an edge number 401 of the plaintext, and has the start point 142, the edge 143, and the end point 144 that are encrypted by the searchable encryption encrypting function set as an encrypted start point 402, an encrypted edge 403, and an encrypted end point 404, respectively.

In addition, the encrypted graph data 400 has the encrypted start point 402, the encrypted edge 403, the encrypted end point 404 that are converted into the encryption query by the searchable encryption query function as an encryption query start point 451, an encryption query edge 452, and an encryption query end point 453. The encrypted graph data 400 is handled as a table-type data format including the above-mentioned seven fields in one row.

The encrypted graph data 400 is information obtained by combining, for each edge, the encrypted graph data and the encryption query for searching the encrypted graph data without decrypting the encrypted graph data. For example, the first row [1*,A,a,B*] of the plaintext graph data of FIG. 4 is encrypted as [1,Enc(*A*),Enc(*a*),Enc(*B*),Query(*A*),Query(*a*),Query(*B*)] in the first row of the encrypted graph data 400 of FIG. 5.

In FIG. 5, Enc(*A*) represents data obtained by encrypting a plaintext *A* by the searchable encryption encrypting function, and Query(*A*) represents data obtained by converting the plaintext *A* into the encryption query by the searchable encryption query function.

For example, the encrypted start point 402 of the edge number 401 of 1 is the start point of the encrypted graph obtained by generating the start point *A* of the plaintext graph data 140 as the ciphertext by the encrypted graph data generation module 120 through the use of the searchable encryption encrypting function.

Further, the encryption query start point 451 of the edge number 401 of 1 is the start point of the encrypted graph obtained by generating the start point *A* of the plaintext graph data 140 as the ciphertext by the encrypted graph retrieval query generation module 130 through the use of the searchable encryption encrypting function.

Then, the encrypted graph data 400 is generated so that the encrypted graph (from 402 to 404) obtained by encrypting the plaintext graph data 140 and the encryption query (from 451 to 453) for retrieving the encrypted graph are set as data in one row for each edge.

FIG. 6 is an example of a data format of encrypted graph retrieval query data. As shown in FIG. 6, the encrypted graph retrieval query 500 includes two pieces of data of a start point query 501 and an end point query 502.

The encrypted graph retrieval query 500 of FIG. 6 indicates an example in which the user terminal 100 queries whether or not a path including a length equal to or smaller than the length *n* with the vertex node *A* being set as the start point and a vertex node *D* being set as the end point exists in the graph data.

The encrypted graph retrieval query generation module 130 generates, based on a query received by the user terminal 100, the encrypted graph retrieval query 500 by inputting the data Query(*A*) obtained by converting the plaintext *A* into the encryption query by the searchable encryption query function to the start point query field and the data Query(*D*) obtained by converting a plaintext *D* into the encryption query by the searchable encryption query function to the end point query field.

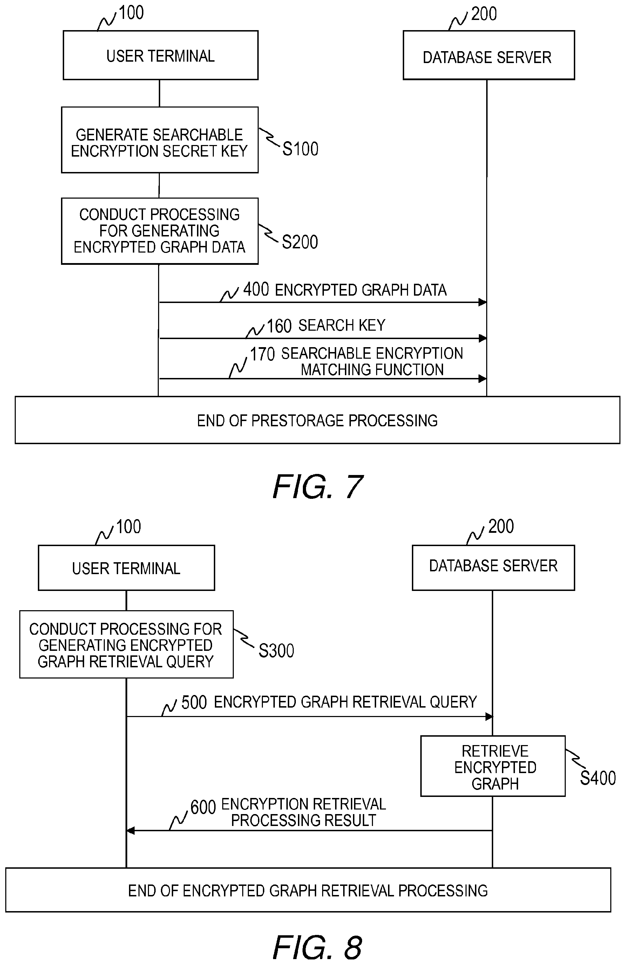

Now, with reference to FIG. 7 to FIG. 10, a description is made of retrieval processing conducted by the system for retrieving the encrypted graph according to the first embodiment.

FIG. 7 is a sequence diagram for illustrating an example of prestorage processing for the encrypted graph. The sequence diagram is an illustration of a procedure for transmission and reception of data and processing of a program that are involved in the prestorage processing for encrypted data conducted by the user terminal 100 and the database server 200.

First, the secret key generation module 110 of the user terminal 100 uses the preset searchable encryption secret key generating function to generate the secret key 150 to be used as the input for the searchable encryption encrypting function and the searchable encryption query function and the search key 160 to be used as the input for the searchable encryption matching function (S100). In the secret key generation module 110, the searchable encryption secret key generating function, the searchable encryption encrypting function, the searchable encryption query function, and the searchable encryption matching function are set as the preset searchable encryption algorithm.

Subsequently, the encrypted graph data generation module 120 of the user terminal 100 generates the encrypted graph formed of from the encrypted start point 402 to the encrypted end point 404 by encrypting the plaintext graph data 140 held by the user terminal 100 based on the data format of the encrypted graph data 400 shown in FIG. 5 through use of the searchable encryption encrypting function and the above-mentioned secret key 150 generated in Step S100.

The encrypted graph data generation module 120 further generates the encryption query formed of from the encryption query start point 451 to the encryption query end point 453 by encrypting the query for searching the plaintext graph data 140 through use of the above-mentioned searchable encryption query function and the above-mentioned secret key 150 generated in Step S100.

The encrypted graph data generation module 120 generates the encrypted graph data 400 by combining the encrypted graph and the encryption query for each of the edges of the plaintext graph data 140 (S200).

Subsequently, the user terminal 100 transmits the encrypted graph data 400 to the database server 200. Subsequently, the user terminal 100 transmits the above-mentioned search key 160 generated in Step S100 and the searchable encryption matching function 170 to the database server 200, and brings the prestorage processing to an end.

FIG. 8 is a sequence diagram for illustrating an example of encrypted graph retrieval processing. The sequence diagram is an illustration of transmission and reception of data and processing of a program that are involved in the encrypted graph retrieval processing conducted by the user terminal 100 and the database server 200.

First, the user terminal 100 receives a retrieval request from the user. The encrypted graph retrieval query generation module 130 generates the encrypted graph retrieval query 500 based on the received retrieval request and the data format shown in FIG. 6 (S300).

For example, in order to determine whether or not the path including the vertex node *A* set as the start point and the vertex node *D* set as the end point exists in the graph data 140, the encrypted graph retrieval query generation module 130 generates the encrypted graph retrieval query 500 from the two pieces of data in which the data Query(*A*) obtained by converting the plaintext *A* into the encryption query by the searchable encryption query function is input to the start point query field and the data Query(*D*) obtained by converting the plaintext *D* into the encryption query by the searchable encryption query function is input to the end point query field as shown in FIG. 6.

Subsequently, the user terminal 100 transmits the above-mentioned encrypted graph retrieval query 500 generated in Step S300 to the database server 200. Subsequently, the DBMS 300 of the database server 200 inputs the received encrypted graph retrieval query 500 to the encrypted graph retrieval module 310, and executes the encrypted graph retrieval processing on the encrypted graph data 400 to generate the retrieval result. The encrypted graph retrieval module 310 generates the retrieval result as an encryption retrieval processing result 600. Then, the DBMS 300 returns the encryption retrieval processing result 600 to the user terminal 100 (S400).

By the above-mentioned processing, the DBMS 300 of the database server 200 searches the encrypted graph data 400 by the encrypted graph retrieval query 500 received from the user terminal 100. The encrypted graph retrieval module 310 of the DBMS 300 generates the graph data 400 that matches a search condition as the encryption retrieval processing result 600 without decrypting the graph data 400, and returns the encryption retrieval processing result 600 to the user terminal 100.

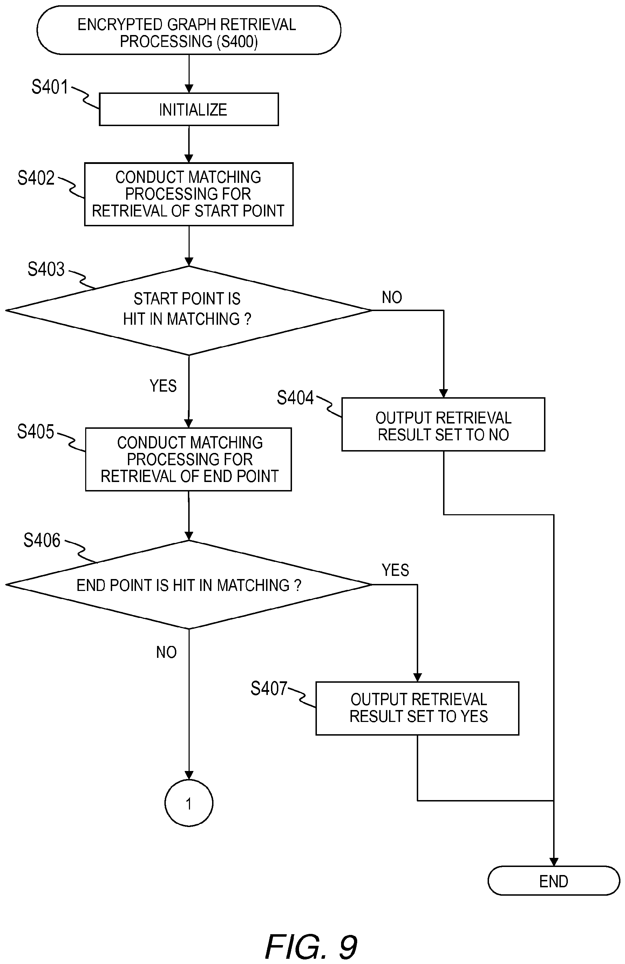

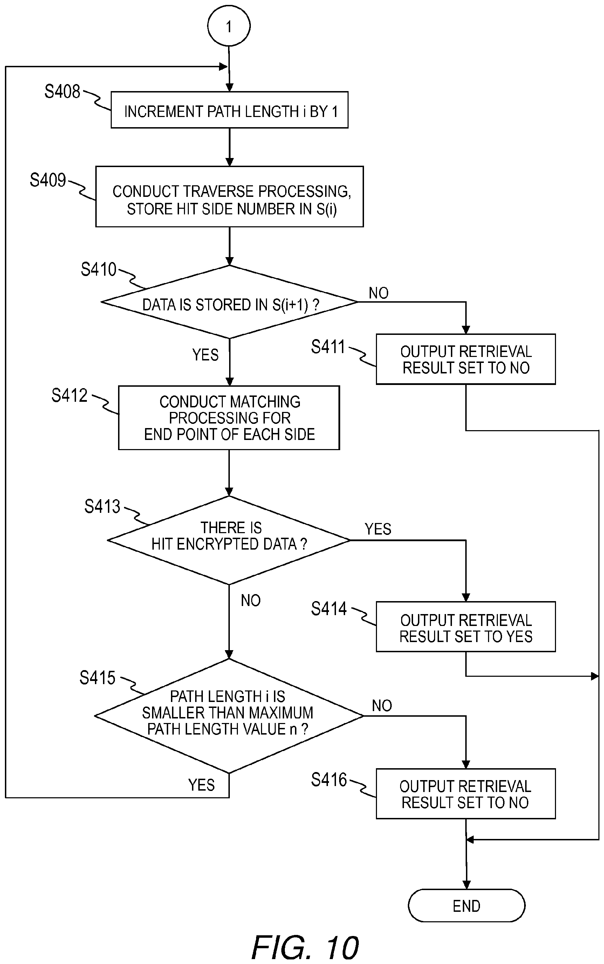

FIG. 9 and FIG. 10 are detailed flowcharts for illustrating a processing example of the above-mentioned encrypted graph retrieval processing (S400) within FIG. 8.

FIG. 9 is the first half of a flowchart for illustrating an example of the retrieval processing for the encrypted graph data. FIG. 10 is the second half of the flowchart for illustrating the example of the retrieval processing for the encrypted graph data.

Through execution of the processing of FIG. 9 and FIG. 10, the database server 200 conducts the traverse processing for the encrypted graph data 400, to thereby be able to determine whether or not the path including a length equal to or smaller than the length *n* with a vertex node corresponding to the start point query 501 within the encrypted graph retrieval query 500 being set as the start point and a vertex node corresponding to the end point query 502 within the encrypted graph retrieval query 500 being set as the end point exists.

First, in FIG. 9, the DBMS 300 of the database server 200, which has received the encrypted graph retrieval query 500, reserves a memory area [pool: S*n*] including internal variable memory areas [pool: S1], [pool: S2], ... [pool: S*n*] for the retrieval processing on the memory 203 so as to correspond to the maximum value *n* of the path length set in advance. The DBMS 300 of the database server 200 initializes the memory area [pool: S*n*]. Subsequently, the DBMS 300 of the database server 200 reserves an internal variable memory area [retrieval result: *R*] for retrieval result storage on the memory 203. The DBMS 300 of the database server 200 initializes the reserved memory area [retrieval result: *R*] by setting an internal variable [path length: *i*] for the retrieval processing to 0 (S401).

Subsequently, the encrypted graph retrieval module 310 of the DBMS 300 sets the start point query 501 of the encrypted graph retrieval query 500 as the encryption query argument of the searchable encryption matching function 170. Further, the encrypted graph retrieval module 310 sets each piece of the encrypted data in the column of the encrypted start point 402 within the encrypted graph data 400 as the ciphertext argument of the searchable encryption matching function 170. Then, the encrypted graph retrieval module 310 inputs the encryption query argument, the ciphertext argument, and the search key 160 to the searchable encryption matching function 170, and executes the matching processing.

Then, the encrypted graph retrieval module 310 stores the edge number of each of the rows hit in the matching in the internal variable memory area [pool: S1] (S402).

Subsequently, the encrypted graph retrieval module 310 determines whether or not the edge number data is stored in the internal variable memory area [pool: S1] (S403). In other words, the encrypted graph retrieval module 310 determines whether or not the matched start point exists in the encrypted graph data 400.

When the edge number is not stored in the internal variable memory area [pool: S1], the procedure advances to Step S404.

In Step S404, the encrypted graph retrieval module 310 generates [retrieval result: *R*] as a retrieval processing result by setting the internal variable memory area [retrieval result: *R*] to No, outputs the retrieval processing result, and brings the encrypted graph retrieval processing (S400) to an end.

Meanwhile, when the edge number is stored in the internal variable memory area [pool: S1], the procedure advances to Step S405.

In Step S405, the encrypted graph retrieval module 310 sets encrypted data in the t-th row of the column of the encrypted end point 404 within the encrypted graph data 400 as the ciphertext argument for each [edge number: *t*] stored in the internal variable memory areas [pool: S1] to [pool: S*n*]. The encrypted graph retrieval module 310 sets the end point query 502 of the encrypted graph retrieval query 500 as the encryption query argument. Then, the encrypted graph retrieval module 310 inputs each of the ciphertext argument, the encryption query argument, and the search key 160 to the searchable encryption matching function 170, and executes the matching processing as to whether or not the encrypted end point 404 of each [edge number: *t*] matches the end point query 502 of the encrypted graph retrieval query 500.

Subsequently, when there is encrypted data hit in the above-mentioned matching processing of Step S405, the procedure advances to Step S407. In Step S407, the encrypted graph retrieval module 310 outputs [retrieval result: *R*] by setting the internal variable memory area [retrieval result: *R*] to Yes, and brings the encrypted graph retrieval processing (S400) to an end.

Meanwhile, when there is no encrypted data hit in the above-mentioned matching processing of Step S405, the procedure advances to Step S408 of FIG. 10 to execute the traverse processing. In Step S408 and the subsequent steps of the traverse processing, the encrypted graph data 400 is searched for the encrypted edge 403 including a path length equal to or smaller than *n* with the encrypted end point 404 of [edge number: *t*] being set as the start point.

First, the encrypted graph retrieval module 310 increments the internal variable [path length: *i*] by 1 (S408).

Subsequently, the encrypted graph retrieval module 310 sets the encryption query end point 453 in the t-th row within the encrypted graph data 400 as the encryption query argument of the searchable encryption matching function 170 for each [edge number: *t*] stored in the internal variable memory area [pool: S*i*]. The encrypted graph retrieval module 310 further sets each piece of encrypted data in the column of the encrypted start point 402 within the encrypted graph data 400 as the ciphertext argument of the searchable encryption matching function 170. Then, the encrypted graph retrieval module 310 inputs the ciphertext argument, the encryption query argument, and the search key 160 to the searchable encryption matching function 170, and executes the matching processing. The encrypted graph retrieval module 310 stores the edge number of each row hit in the matching in the internal variable memory area [pool: S(*i*+1)] (S409).

Subsequently, the encrypted graph retrieval module 310 determines whether or not the edge number is stored in the internal variable memory area [pool: S(*i*+1)] (S410). When the edge number is stored in the internal variable memory area [pool: S(*i*+1)], the encrypted graph retrieval module 310 determines that the encrypted edge 403 including the encrypted end point 404 of [edge number: *t*] set as the start point exists, and the procedure advances to Step S412.

Meanwhile, when the edge number is not stored in the internal variable memory area [pool: S(*i*+1)], the encrypted graph retrieval module 310 determines that the encrypted edge 403 including the encrypted end point 404 of [edge number: *t*] set as the start point does not exist, and the procedure advances to Step S411. In Step S411, the encrypted graph retrieval module 310 outputs [retrieval result: *R*] by setting the internal variable memory area [retrieval result: *R*] to No, and brings the encrypted graph retrieval processing (S400) to an end.

In Step S412, the encrypted graph retrieval module 310 sets encrypted data in the t-th row of the column of the encrypted end point 404 within the encrypted graph data 400 as the ciphertext argument for each [edge number: *t*] stored in the internal variable memory area [pool: S(*i*+1)]. The encrypted graph retrieval module 310 further sets the end point query 502 of the encrypted graph retrieval query 500 as the encryption query argument. Then, the encrypted graph retrieval module 310 inputs each of the ciphertext argument, the encryption query argument, and the search key 160 to the searchable encryption matching function 170, and executes the matching processing as to whether or not the encrypted end point 404 of each [edge number: *t*] matches the end point query 502 of the encrypted graph retrieval query 500.

Subsequently, the encrypted graph retrieval module 310 determines whether or not there is encrypted data hit in the matching processing of Step S412 (S413). When there is encrypted data hit in the matching processing, the procedure advances to Step S414, and when there is no hit encrypted data, the procedure advances to Step S415.

In Step S414, the encrypted graph retrieval module 310 outputs [retrieval result: *R*] by setting the internal variable memory area [retrieval result: *R*] to Yes, and brings the encrypted graph retrieval processing (S400) to an end.

Meanwhile, when there is no hit data, in Step S415, the encrypted graph retrieval module 310 conducts a comparison between the internal variable [path length: *i*] and the maximum value *n* of the path length. When *i* is equal to *n,* the procedure advances to Step S416, and when *i* is smaller than *n,* the procedure returns to Step S408. In Step S408, [path length: *i*] is incremented, and then the above-mentioned processing is repeatedly conducted.

In Step S416, the encrypted graph retrieval module 310 outputs [retrieval result: *R*] by setting the internal variable memory area [retrieval result: *R*] to No, and brings the encrypted graph retrieval processing (S400) to an end.

By the above-mentioned processing, the database server 200 can reduce a load required for the retrieval processing for data including an encrypted graph structure. In addition, the database server 200 can determine whether or not the path including a length equal to or smaller than the length n with the vertex node corresponding to the start point query 501 being set as the start point and the vertex node corresponding to the end point query 502 being set as the end point exists in the encrypted graph data 400.

Now, the reduction of the load required for the retrieval processing is described below.

A computer (not shown) of the user encrypts each cell of the table of FIG. 4 through the use of the searchable cipher, and stores the encrypted data on a cloud (not shown). The computer of the user issues a retrieval instruction (query) for listing all the shortest paths connecting between the vertex node *A* and the vertex node *D* of FIG. 3. Then, the cloud including a DBMS receives the query and executes the retrieval. Such a case is assumed below.

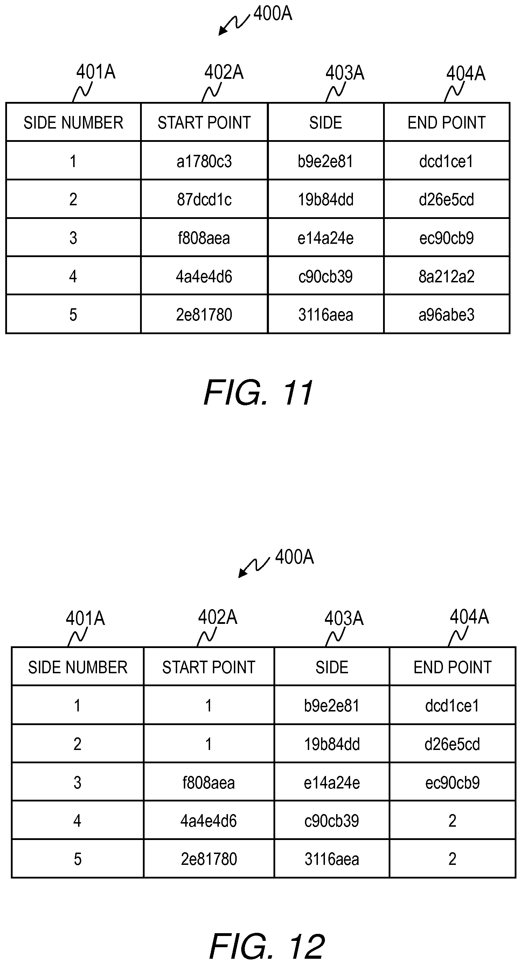

FIG. 11 is a table 400A obtained by encrypting each cell of the table of FIG. 4 through the use of the searchable cipher. The table 400A includes an edge number 401A, an encrypted start point 402A, an encrypted edge 403A, and an encrypted end point 404A in one row.

The user transmits an encryption query Query 1 for a searchable cipher of the vertex node *A* and an encryption query Query2 for a searchable cipher of the vertex node *D* to the cloud, and this causes the cloud to execute the matching processing between Query1 and Query2 for the encrypted data of each cell.

As a result of the matching processing, such a result as shown in FIG. 12 is obtained. FIG. 12 is the table 400A obtained by decrypting each cell of the table of FIG. 11 through use of the encryption queries Query 1 and Query2.

As a result, the cloud obtains the fact that the vertex of Query1 and the vertex of Query2 are not adjacent nodes, but in order to search for the path connecting between Query 1 and Query2, temporarily returns, for example, an encrypted end point node "dcd1ce1" in the fourth column of the first row to the computer of the user. The computer of the user decrypts the encrypted data "dcd1ce1", obtains the vertex node *B,* and then generates an encryption query Query3 for a searchable cipher of the vertex node *B.* Then, the computer of the user returns Query3 to the cloud, and the cloud executes the matching processing between Query3 and the encrypted data of each cell, and obtains Query1→Query3→Query2 as one of the shortest paths.

In addition, in order to search for another one of the shortest paths, the cloud returns, for example, a piece of encrypted data "d26e5cd" in the fourth column of the second row to the computer of the user, obtains an encryption query Query4 for a vertex node C, and then conducts the same processing, to thereby obtain Query1→Query4→Query2 as another one of the shortest paths.

In a case where each cell is thus encrypted through the use of the searchable cipher of a related-art technology, there exists a problem in that, when the graph structure is traversed (in short, retrieval processing for repeatedly tracing the adjacent node, for example, retrieving a given vertex node, further retrieving a node adjacent to the given vertex node, and further retrieving another node adjacent thereto), a large amount of processing for generating, transmitting, and receiving data required for the traverse processing occurs between a cloud user and the cloud, which may cause processing delay.

In contrast, in the first embodiment, as illustrated in FIG. 7, the graph data 400 of FIG. 4 obtained by combining the encrypted graph and the encryption query for each edge is generated on the user terminal 100 and transmitted to the database server 200 in advance. When the user terminal 100 conducts the retrieval, as illustrated in FIG. 8, it suffices that only the encrypted graph retrieval query 500 including the start point query 501 and the end point query 502 shown in FIG. 5 is transmitted to the database server 200.

With this configuration, it is possible to suppress an increase in amounts of transmission and reception of the encrypted data and the encryption query, and particularly in the traverse processing, it is possible to suppress an increase in amount of the processing for generating, transmitting, and receiving data required for the processing, which can reduce the load required for the retrieval processing for data including the encrypted graph structure.

This invention is not limited to the first embodiment described above, and various changes can be made within the scope of the gist of the invention.

For example, in the first embodiment, the maximum value *n* of the path length is assumed to be set in advance, but does not necessarily need to be set in advance. When the user terminal 100 transmits the encrypted graph retrieval query 500 to the database server 200, the maximum value *n* of the path length may be designated by adding the column of the maximum value of the path length to the data format columns of the encrypted graph retrieval query 500 and setting *n* as the value of its field. Further, when it is clear in advance that there is no closed path in the directed graph, it is guaranteed that the encrypted graph retrieval processing (S400) is to be terminated without the designation of the maximum value *n* of the path length, and hence the maximum value *n* of the path length does not need to be designated.

Further, in the first embodiment, the encrypted graph retrieval processing (S400) for solving a determination problem as to whether or not the path including a length equal to or smaller than the length *n* with a specific vertex node being set as the start point and another vertex node being set as the end point exists in the graph data is executed. However, the encrypted graph retrieval processing (S400) does not necessarily need to be processing for solving the above-mentioned determination problem. For example, in order to list the edges including a specific vertex as the start point from such an encrypted graph as described in JP 2012-123614 A, the column of the encrypted start point of the encrypted graph may be searched by the encryption query of the encrypted specific vertex, and data in each row of the encrypted graph hit in the matching processing may be set as the encryption retrieval processing result 600.

Further, similarly with a specific edge being converted into the encryption query, the column of the encrypted edge of the encrypted graph may be searched by the encryption query of the encrypted specific edge, and data in each row of the encrypted graph hit in the matching processing may be set as the encryption retrieval processing result 600.

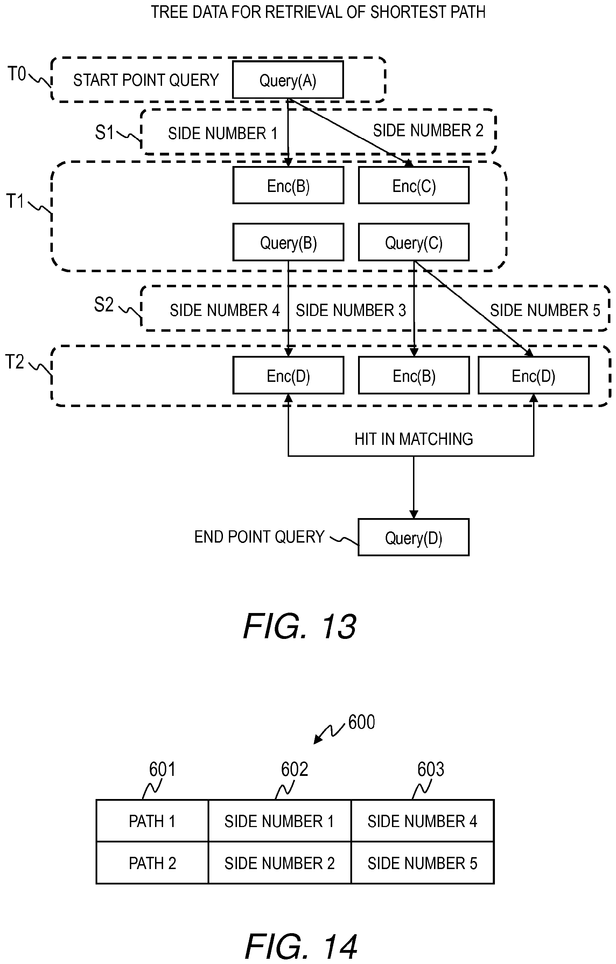

Further, as another example of the encrypted graph retrieval processing (S400), when a shortest path exists in the graph data including a specific vertex node set as the start point and another vertex node set as the end point, the shortest path may be set as the encryption retrieval processing result 600 in such a manner as illustrated in FIG. 13.

FIG. 13 is a diagram for illustrating an example of tree data for the retrieval of the shortest path. In FIG. 13, pieces of encrypted data on the start point and the end point and the encryption query are organized as the tree structure in association with the edge number stored in each S*i* in addition to the internal variable memory areas [pool: S1], [pool: S2], ... [pool: S*n*] for the retrieval processing within FIG. 9 and FIG. 10 in the encrypted graph retrieval processing (S400) of the first embodiment. As illustrated in FIG. 13, the encrypted data and the encryption query are stored in each of internal variable memory areas [pool: T0], [pool: T1], ... [pool: T*n*] of the tree structure. With the tree structure, when the shortest path is found in Step S414 of FIG. 10 described above, the found shortest path can be set as the encryption retrieval processing result 600 from the internal variable memory areas [pool: T0], [pool: T1], ... [pool: T*n*] of the tree structure and the internal variable memory areas [pool: S1], [pool: S2], ... [pool: S*n*] of a link structure. FIG. 14 is a table for showing an example of a result of the retrieval of the shortest path.

As shown in FIG. 14, the encryption retrieval processing result 600 for the retrieval of the shortest path includes a path number 601 and edge numbers 602 and 603 in one row.

Further, in order to narrow down the shortest paths to designated one from the encryption retrieval processing result 600 for the retrieval of the shortest path, a set of the encryption queries of edges of the shortest path to be narrowed down to may be added to the encrypted graph retrieval query 500. For example, when the shortest paths are narrowed down to a path formed of the edge *a* and an edge *d,* the encrypted graph retrieval query 500 may be set by adding {Query(*a*),Query(*d*)}, which is the set of the edges of the shortest path to be narrowed down to, to the encrypted graph retrieval query 500 of FIG. 6.

Further, in a case of employing an existing (publicly-known or well-known) algorithm for searching vertices and paths while traversing the graph, when other encrypted vertices adjacent to a specific encrypted vertex are listed by generating the encrypted graph data in the data format shown in FIG. 5, the existing algorithm may be achieved on the encrypted graph data by replacing the traverse processing within the algorithm for the traverse processing of Step S409 of FIG. 10 by the existing algorithm.

Further, in the first embodiment, the encrypted graph retrieval module 310 cannot cause the searchable encryption matching function 170 to function without the search key 160. Therefore, the encrypted graph data 400 can be searched only on the computer to which the search key 160 has been distributed. This can ensure security when the retrieval processing is conducted by outsourcing the encrypted graph data 400.

### Second Embodiment

Next, a second embodiment of this invention is described with reference to the accompanying drawings.

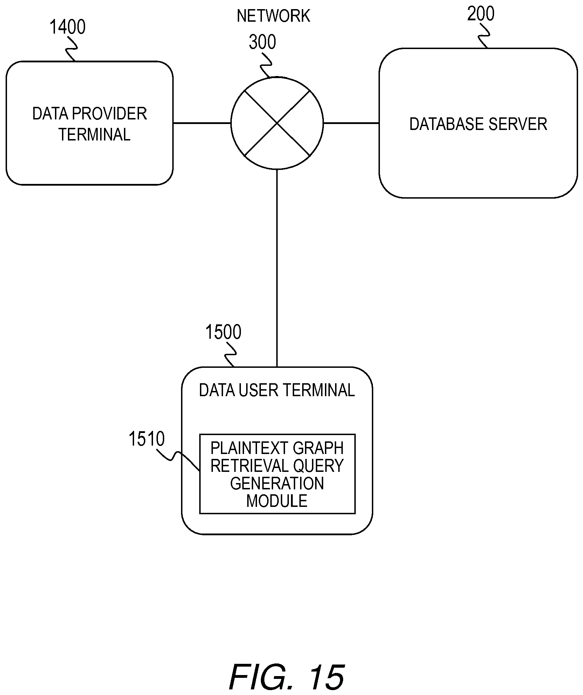

FIG. 15 is a block diagram for illustrating an example of a system for retrieving an encrypted graph according to the second embodiment.

As illustrated in FIG. 15, the system for retrieving the encrypted graph allows a data provider terminal 1400, the database server 200, and a data user terminal 1500 to transmit and receive information to/from each other through the network 300.

The first embodiment and the second embodiment differ from each other in that the functions and processing of the user terminal 100 of the first embodiment are divided into those of the data provider terminal 1400 and those of the data user terminal 1500 illustrated in FIG. 15. In the same manner as the user terminal 100 of the first embodiment, the data provider terminal 1400 is configured to generate the encrypted graph data 400 and store the encrypted graph data 400 in the database server 200.

The data user terminal 1500 is configured to issue a plaintext graph retrieval request, and to acquire the encrypted graph retrieval query 500 from the data provider terminal 1400 to access the database server 200.

A hardware configuration of the data provider terminal 1400, the data formats of the plaintext and the encrypted graph data 400, the data format of the encrypted graph retrieval query 500, and the processing of the encrypted graph retrieval are the same as those of the user terminal 100 of the first embodiment. The same components as those of the first embodiment are denoted by like reference symbols. The database server 200 is the same as that of the first embodiment.

The data user terminal 1500 has the same hardware configuration as that of the user terminal 100 of the first embodiment, and has a software configuration including a plaintext graph retrieval query generation module 1510 configured to generate a plaintext graph retrieval query 420 from the plaintext graph retrieval request.

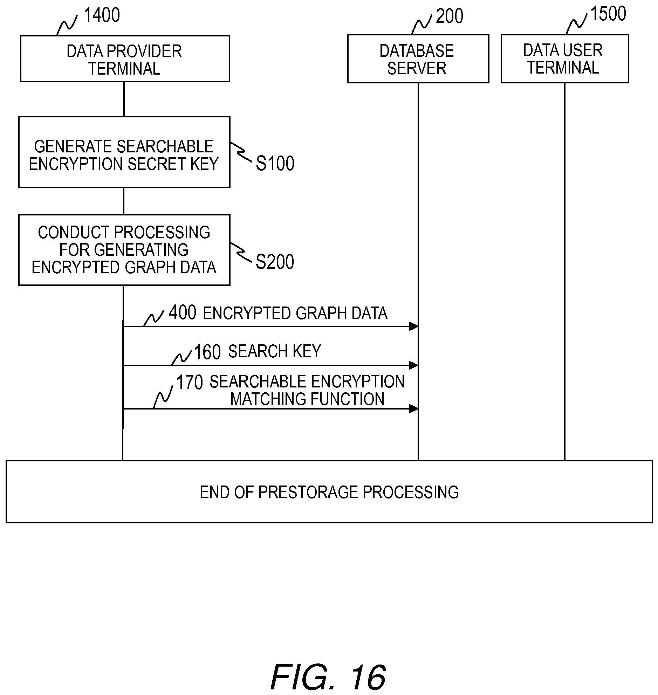

FIG. 16 is a sequence diagram for illustrating an example of prestorage processing for the encrypted data according to the second embodiment.

First, in the same manner as the user terminal 100 of the first embodiment, the secret key generation module 110 of the data provider terminal 1400 uses the searchable encryption secret key generating function to generate the secret key 150 to be used as the input for the searchable encryption encrypting function and the searchable encryption query function and the search key 160 to be used as the input for the searchable encryption matching function 170 (S100).

Subsequently, the data provider terminal 1400 generates the encrypted graph data 400 including the encrypted graph and the encryption query by encrypting the plaintext graph data 140 held by the data provider terminal 1400 based on the data format shown in FIG. 5 through the use of the searchable encryption encrypting function, the searchable encryption query function, and the above-mentioned secret key 150 generated in Step S100 (S200).

Subsequently, the data provider terminal 1400 transmits the encrypted graph data 400 to the database server 200.

Subsequently, the data provider terminal 1400 transmits the above-mentioned search key 160 generated in Step S100 to the database server 200. The data provider terminal 1400 further transmits the searchable encryption matching function 170 to the database server 200, and brings the prestorage processing to an end.

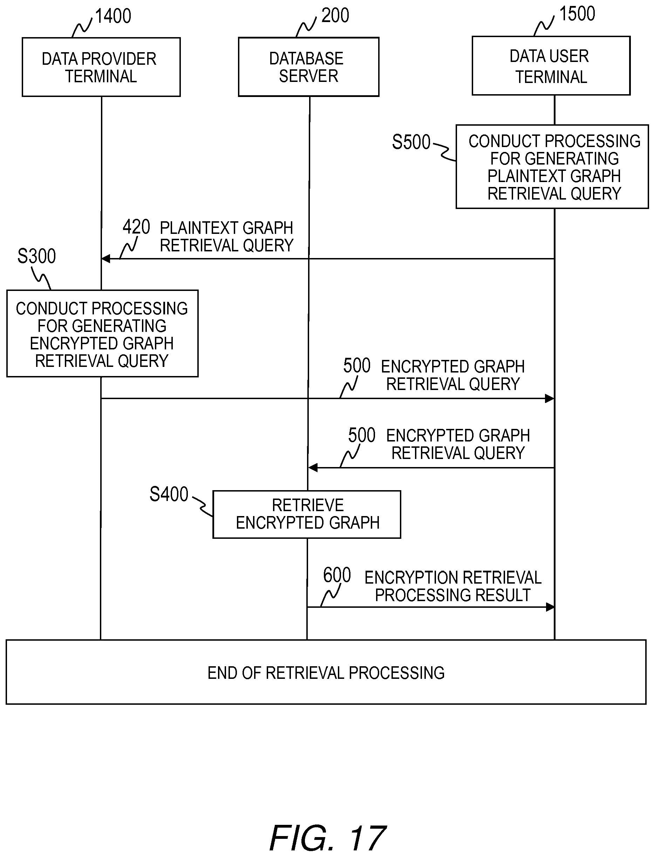

FIG. 17 is a sequence diagram for illustrating an example of encrypted graph retrieval processing conducted by the data provider terminal 1400, the data user terminal 1500, and the database server 200.

First, the data user terminal 1500 causes the plaintext graph retrieval query generation module 1510 to generate the plaintext graph retrieval query 420, and transmits the plaintext graph retrieval query 420 to the data provider terminal 1400 (S500). The plaintext graph retrieval query 420 has the same data format as the data format of the encrypted graph retrieval query shown in FIG. 6, and has plaintext data contents.

For example, the plaintext graph retrieval query 420 issues a query as to whether or not the path including the vertex node *A* set as the start point and the vertex node *D* set as the end point exists in the graph data. In the case of the above-mentioned query, the plaintext graph retrieval query generation module 1510 generates, as the plaintext graph retrieval query 420, two pieces of data including the plaintext *A* input to the field of the start point query 501 and the plaintext *D* input to the field of the end point query 502 as shown in FIG. 6.

Subsequently, the data provider terminal 1400 receives the plaintext graph retrieval query 420 from the data user terminal 1500. The encrypted graph retrieval query generation module 130 of the data provider terminal 1400 generates the encrypted graph retrieval query 500 based on the data format shown in FIG. 6, and transmits the encrypted graph retrieval query 500 to the data user terminal 1500 (S300).

Subsequently, when the data user terminal 1500 receives the encrypted graph retrieval query 500 generated in Step S300, the encrypted graph retrieval query 500 transmits the encrypted graph retrieval query 500 as it is to the database server 200.

Subsequently, in the same manner as in the first embodiment, the DBMS 300 of the database server 200 inputs the received encrypted graph retrieval query 500 to the encrypted graph retrieval module 310, and executes the encrypted graph retrieval processing on the encrypted graph data 400. The encrypted graph retrieval module 310 generates the retrieval result as the encryption retrieval processing result 600. Then, the DBMS 300 returns the encryption retrieval processing result 600 to the data user terminal 1500 (S400).

Further, when the determination problem as to whether or not the path including the vertex node *A* set as the start point and the vertex node *D* set as the end point exists in the graph data is queried as the encrypted graph retrieval query 500, the encryption retrieval processing result 600 can output a binary result of [Yes] or [No].

When the encrypted graph retrieval query 500 is used to search a set of vertex nodes adjacent to a specific vertex node, the ciphertexts of the vertex nodes adjacent to the specific vertex node are output from the database server 200 as the encryption retrieval processing result 600.

In this case, the data user terminal 1500 transmits the received encryption retrieval processing result 600 to the data provider terminal 1400 holding the secret key 150, and requests the decryption processing. The data provider terminal 1400 may then return the set of the plaintexts of the adjacent vertex nodes to the data user terminal 1500.

The data provider terminal 1400 may instead transmit the secret key 150 to the data user terminal 1500 to allow the data user terminal 1500 to generate the encrypted graph retrieval query and conduct the decryption processing for the encryption retrieval processing result 600.

As described above in the second embodiment, even in the case of employing the data provider terminal 1400 and the data user terminal 1500 that are separately provided, it is possible to suppress the increase in amounts of the transmission and reception of the encrypted data and the encryption query, and particularly in the traverse processing, it is possible to suppress the increase in amount of the processing for generating, transmitting, and receiving data required for the processing, which can reduce the load required for the retrieval processing for data including the encrypted graph structure.

In Step S300 of FIG. 17, the data provider terminal 1400 transmits the encrypted graph retrieval query 500 to the data user terminal 1500, but may instead transmit the encrypted graph retrieval query 500 and a transmission destination of the retrieval result to the database server 200.

### Third Embodiment

Next, a third embodiment of this invention is described with reference to the accompanying drawings.

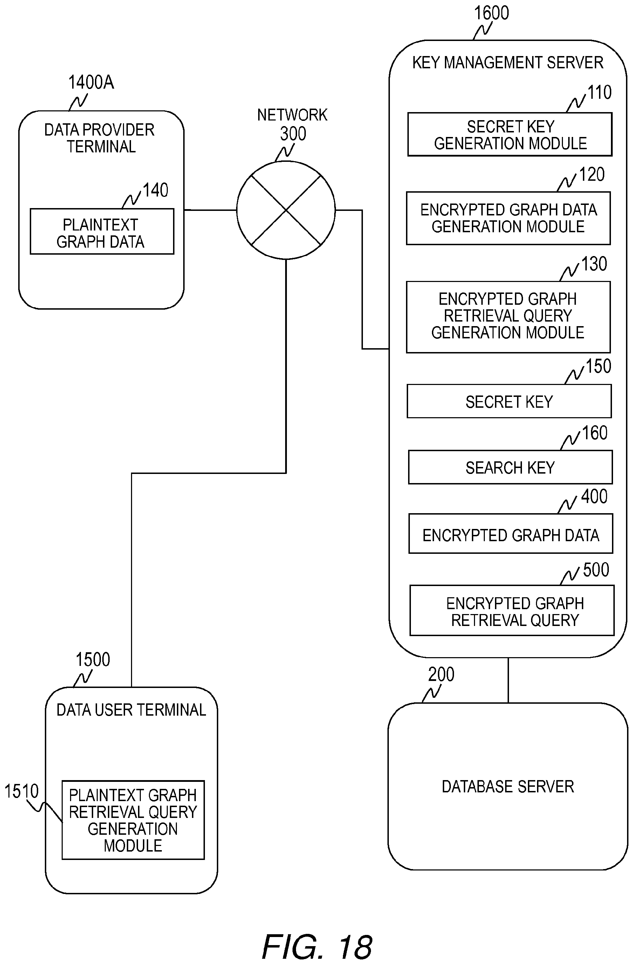

FIG. 18 is a block diagram for illustrating an example of a system for retrieving an encrypted graph according to the third embodiment of this invention. As illustrated in FIG. 18, the system for retrieving the encrypted graph is configured so that a data provider terminal 1400A, the data user terminal 1500, and a key management server 1600 can transmit and receive information to/from one another through the network 300, and that the key management server 1600 and the database server 200 are coupled to each other so as to be able to transmit and receive information to/from each other. The database server 200 may be coupled to the network 300.

The third embodiment is different from the first embodiment and the second embodiment in that the key management server 1600 configured to conduct processing using the secret key 150, for example, encryption, decryption, and query generation is provided in the third embodiment.

The database server 200 is the same as that of the first embodiment. The data user terminal 1500 is the same as that of the second embodiment.

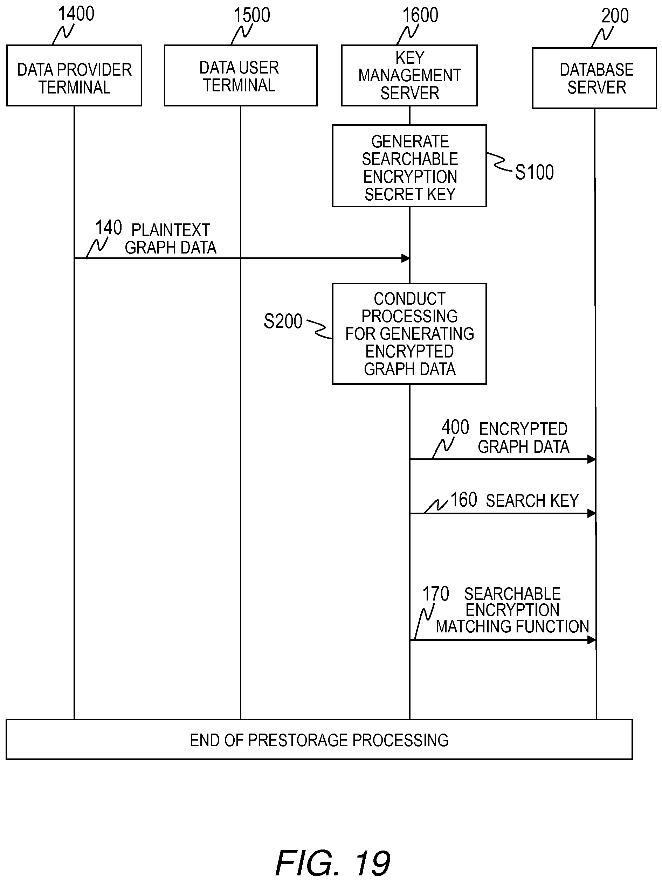

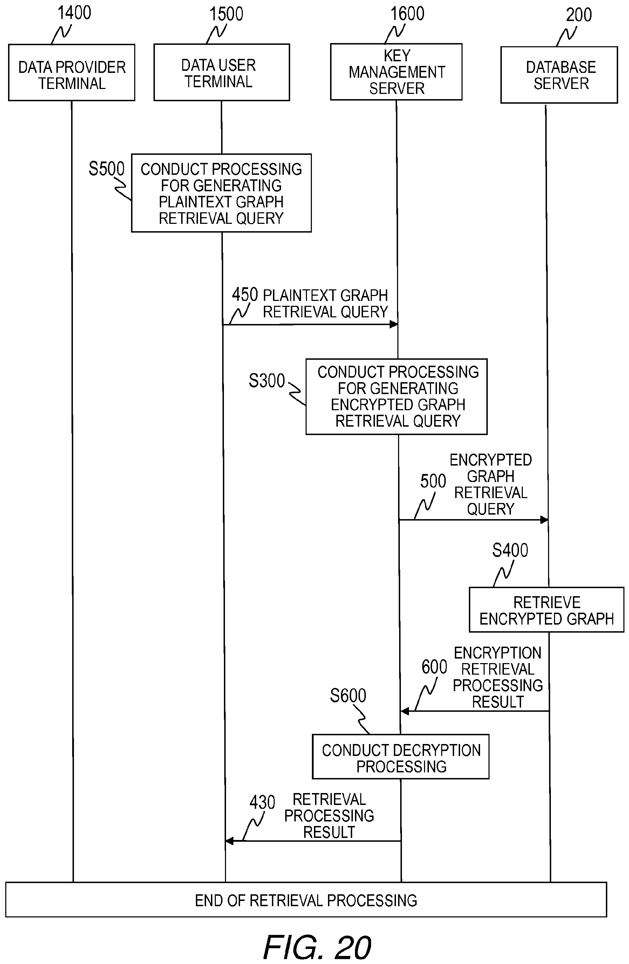

Now, the third embodiment is described with reference to FIG. 19 and FIG. 20.

The data provider terminal 1400A includes only the plaintext graph data 140 within the configuration of the second embodiment. Meanwhile, the key management server 1600 is obtained by excluding the plaintext graph data 140 from the user terminal 100 of the first embodiment. In other words, the key management server 1600 includes the secret key generation module 110, the encrypted graph data generation module 120, the encrypted graph retrieval query generation module 130, the secret key 150, the search key 160, and the encrypted graph retrieval query 500. In the following description, the same components as those of the first embodiment or the second embodiment are denoted by like reference symbols.

FIG. 19 is a sequence diagram for illustrating an example of prestorage processing for the encrypted graph data according to the third embodiment.

First, in the same manner as the user terminal 100 of the first embodiment, the secret key generation module 110 of the key management server 1600 uses the searchable encryption secret key generating function to generate the secret key 150 to be used as the input for the searchable encryption encrypting function and the searchable encryption query function and the search key 160 to be used as the input for the searchable encryption matching function 170 (S100).

Subsequently, the data provider terminal 1400 transmits the plaintext graph data 140 held by the data provider terminal 1400, which is illustrated in FIG. 4, to the key management server 1600. The key management server 1600 generates the encrypted graph data 400 including the encrypted graph and the encryption query by encrypting the received plaintext graph data 140 based on the data format shown in FIG. 5 through the use of the searchable encryption encrypting function, the searchable encryption query function, and the above-mentioned secret key 150 generated in Step S100 (S200).

Subsequently, the key management server 1600 transmits the encrypted graph data 400 to the database server 200. Subsequently, the key management server 1600 transmits the above-mentioned search key 160 generated in Step S100 to the database server 200. The key management server 1600 further transmits the searchable encryption matching function 170 to the database server 200, and brings the prestorage processing to an end.

FIG. 20 is a flowchart for illustrating an example of encrypted graph retrieval processing conducted by the data provider terminal 1400, the data user terminal 1500, the key management server 1600, and the database server 200.

First, in the same manner as in the second embodiment, the data user terminal 1500 causes the plaintext graph retrieval query generation module 1510 to generate the plaintext graph retrieval query 420, and transmits the plaintext graph retrieval query 420 to the key management server 1600 (S500).

Subsequently, the encrypted graph retrieval query generation module 130 of the key management server 1600 generates the encrypted graph retrieval query 500 based on the data format shown in FIG. 6, and transmits the encrypted graph retrieval query 500 to the database server 200 (S300).

Subsequently, in the same manner as in the first embodiment, the DBMS 300 of the database server 200 inputs the received encrypted graph retrieval query 500 to the encrypted graph retrieval module 310, and executes the encrypted graph retrieval processing on the encrypted graph data 400. The encrypted graph retrieval module 310 generates the retrieval result as the encryption retrieval processing result 600, and returns the encryption retrieval processing result 600 to the key management server 1600 (S400).

At this time, when the determination problem as to whether or not the path including the vertex node *A* set as the start point and the vertex node *D* set as the end point exists in the graph data is queried as the encrypted graph retrieval query 500, the encryption retrieval processing result 600 can output the binary result of [Yes] or [No].

When the encrypted graph retrieval query 500 is used to search the set of vertex nodes adjacent to a specific vertex node, the ciphertexts of the vertex nodes adjacent to the specific vertex node are output from the database server 200 as the encryption retrieval processing result 600.

When the encryption retrieval processing result 600 thus includes the ciphertext, the key management server 1600 uses the secret key to conduct the decryption processing for the ciphertext (S600). Subsequently, the key management server 1600 transmits a decrypted retrieval processing result 430 to the data user terminal 1500, and brings the retrieval processing to an end.

As described above in the third embodiment, even in the case of employing the data provider terminal 1400, the data user terminal 1500, and the key management server 1600 that are separately provided, it is possible to suppress the increase in amounts of the transmission and reception of the encrypted data and the encryption query, and particularly in the traverse processing, it is possible to suppress the increase in amount of the processing for generating, transmitting, and receiving data required for the processing, which can reduce the load required for the retrieval processing for data including the encrypted graph structure.

### Fourth Embodiment

Next, a fourth embodiment of this invention is described with reference to the accompanying drawings.

In the first embodiment, the encrypted graph data 400 is encrypted in the data format shown in FIG. 5. After the prestorage processing is finished in FIG. 7, the database server 200 is allowed to use, for example, the encryption query end point 453 of "Query(*B*)" of the edge number of 1 of the encrypted graph data 400 of FIG. 5 to search the column of the encrypted start point 402 of the encrypted graph data 400 of FIG. 5 through use of the searchable encryption matching function, to thereby determine whether or not the encrypted start point 402 of "Enc(*B*)" of the edge number of 4 is hit in the matching.

As a result, before the user terminal 100 transmits the encrypted graph retrieval query 500, the database server 200 can acquire the graph structure of the encrypted graph data 400 indicating that the end point node of the edge number of 1 match the start point node of the edge number of 4, that is, information indicating which node is the start point, which node is the end point, and which nodes are connected to each other. The same applies to the second and third embodiments.

In view of the foregoing, in the fourth embodiment, only after the user terminal 100 transmits the encrypted graph retrieval query 500, the database server 200 is allowed to calculate the graph structure, that is, which node is the start point, which node is the end point, and which nodes are connected to each other. In other words, the database server 200 cannot obtain a solution even by executing the encryption query until receiving the encrypted graph retrieval query 500.

Therefore, in the fourth embodiment, the data format of the encrypted graph data 400 of the first embodiment is changed to encrypted graph data 400B based on JP 2012-123614 A described above. The other configuration is the same as that of the first embodiment.

First, the secret key generation module 110 of the user terminal 100 is provided with a common key encryption method C(-,-) and a hash function H(-). In this case, a ciphertext obtained by encrypting a message *m* by a secret key *sk* through use of the common key encryption method C(-,-) is expressed by *C*(*m,sk*), and a hash value of the hash function H(-) of the message *m* is expressed by H(*m*). Further, ADVANCED ENCRYPTION STANDARD (AES), [online], November 26, 2001, Federal Information Processing Standards Publication 197, [retrieved on October 2, 2014], Internet <http://csrc.nist.gov/publications/fips/fips197/fips-197.pdf> and Secure Hash Standard (SHS), [online], March 2012, FEDERAL INFORMATION PROCESSING STANDARDS PUBLICATION 180-4, [retrieved on October 2, 2014], Internet <http://csrc.nist.gov/publications/fips/fips180-4/fips-180-4.pdf described above may be used for each of the common key encryption method and the hash function.

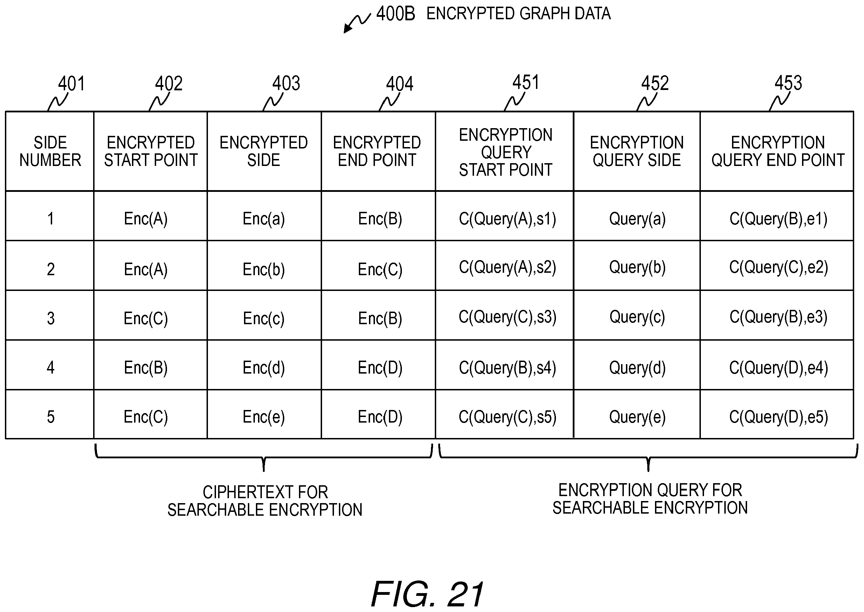

FIG. 21 is a table for showing a data format of the encrypted graph data 400B of the fourth embodiment. As shown in FIG. 21, unlike in FIG. 5, the value Query(-) of each cell of the column of the encryption query start point 451 and the column of the encryption query end point 453 is encrypted by the common key encryption method C(-,-).

For example, the value of the encryption query end point 453 of the edge number of 1 is Query(*B*) in FIG. 5 of the first embodiment, but is changed to C(Query(*B*),*e1*) in FIG. 21.

In this case, a secret key *e1* for the encryption query end point 453 of C(Query(*B*),*e1*) of the edge number of 1 is a hash value of the above-mentioned hash function H of a homomorphic function value F_{R} (708 in JP 2012-123614 A) to be used for generating the ciphertext of the encryption start point of Enc(*A*) of the edge number of 1 through the use of the searchable encryption encrypting function of a searchable encryption method disclosed in JP 2012-123614 A (referred to as "processing for creating secret registered data 712" in JP 2012-123614 A).

That is, the secret key *e1*=H(F_{R}) is obtained. In the following, the homomorphic function value F_{R} (708 in JP 2012-123614 A) to be used for generating the ciphertext Enc(*X*) through the use of the searchable encryption encrypting function of the searchable encryption method disclosed in JP 2012-123614 A is expressed by F_{R}-Enc(*X*).

In the same manner, when the respective cells of the column of the encryption query end point 453 are encrypted by the common key encryption method C(-,-), in regard to the edge number 401 of 2 and the subsequent edge numbers 401, the values of secret keys *e2, e3, e4,* and *e5* are set as hash values of the hash function H of the homomorphic function values F_{R}-Enc(*A*), F_{R}-Enc(*C*), F_{R}-Enc(*B*), and F_{R}-Enc(*C*) to be used for encrypting start points Enc(*A*), Enc(*C*), Enc(*B*), and Enc(*C*) of their corresponding edge numbers through the use of the searchable encryption encrypting function of the searchable encryption method disclosed in JP 2012-123614 A.

That is, *e1*=H(F_{R}-Enc(*A*)), *e2*=H(F_{R}-Enc(*A*)), *e3*=H(F_{R}-Enc(*C*)), *e4*=H(F_{R}-Enc(*B*)), and *e5*=H(F_{R}-Enc(*C*)) are set.

In the above-mentioned manner, the respective cells of the column of the encryption query end point 453 are encrypted as *e1, e2, e3, e4,* and *e5.* Therefore, when the above-mentioned prestorage processing illustrated in FIG. 7 of the first embodiment is finished, that is, in a state in which the encrypted graph retrieval query 500 or the homomorphic function value has not been received from the user terminal 100, it is difficult to execute the retrieval through use of the searchable encryption matching function 170 and the encryption query.

Meanwhile, as disclosed in JP 2012-123614 A by Expression (8) used in the processing of Step S1311, the homomorphic function value F_{R}-Enc(*A*) is acquired from the user terminal 100 by the database server 200 in the processing for conducting the matching processing between Enc(*A*) and Query(*A*) through the use of the searchable encryption matching function 170.

Therefore, the database server 200 receives Query(*A*) within the encrypted graph retrieval query 500 from the user terminal 100, acquires the homomorphic function value F_{R}-Enc(*A*), and calculates a hash value H(F_{R}-Enc(*A*))=e1 through use of the hash function H to obtain the key *e1.* With this configuration, the database server 200 can calculate the secret key *e1* through use of the homomorphic function value F_{R}-Enc(*A*) acquired from the user terminal 100, to thereby decrypt C(Query(*B*),*e1*) within the column of the encryption query end point 453 of the edge number of 1 and obtain Query(*B*). In other words, the user terminal 100 further encrypts the encryption query through use of the second key *e1,* and in the case of executing the retrieval, transmits the homomorphic function value for extracting the encrypted encryption query as a query execution key.

Then, the database server 200 calculates the second key *e1* by the hash function H from the homomorphic function value being the query execution key, and decrypts the encrypted encryption query to obtain the encryption query. It suffices that the hash function H is transmitted to the database server 200 along with the search key 160 or the like in advance by the user terminal 100.

After that, the above-mentioned traverse processing illustrated in FIG. 9 and FIG. 10 of the first embodiment can also be executed in the same manner. However, when the searchable encryption matching function 170 is used to execute the matching processing, in the step of the matching processing after the data is hit in the matching, the database server 200 calculates the secret key through use of the homomorphic function value F_{R}-Enc(*X*) used for encrypting each cell of the column of the encryption query end point 453 by a common key C(-,-), decrypts each cell of the column of the encryption query end point 453, and executes the traverse processing.

Further, in the above-mentioned example, the hash value H(F_{R}-Enc(*X*)) of the hash function H of the homomorphic function value F_{R}-Enc(*X*) used for generating the ciphertext of the encrypted start point 402 of the same edge number is set as the secret key used for encrypting each cell of the column of the encryption query end point 453 by the common key encryption method C(-,-). The fourth embodiment is not limited thereto, and the hash value H(F_{R}-Enc(*X*)) of the hash function H of the homomorphic function value F_{R}-Enc(*X*) used for generating the ciphertext of the encrypted end point 404 of the same edge number may be set as the secret key used for encrypting each cell of the column of the encryption query start point 451 by the common key encryption method C(-,-).

That is, *s1*=H(F_{R}-Enc(*B*)), *s2*=H(F_{R}-Enc(*C*)), *s3*=H(F_{R}-Enc(*B*)), *s4*=H(F_{R}-Enc(*D*)), and *s5*=H(F_{R}-Enc(*D*)) are set as secret keys *s1, s2, s3, s4,* and *s5* used in respective ciphertexts C(Query(*A*),*s1*), C(Query(*A*),*s2*), C(Query(*C*),*s3*), C(Query(*B*),*s4*), and C(Query(*C*),*s5*) in the column of the encryption query start point 451 of FIG. 21. Then, the secret key 150 described above may be calculated from the homomorphic function value calculated in intermediate processing of the matching processing for the encrypted end point 404 during the traverse processing for tracing back from the end point to the start point of the graph.

As described above, according to the fourth embodiment, it is possible not only to reduce the load required for the retrieval processing for data including the encrypted graph structure but also to improve confidentiality of the encrypted graph data 400B by encrypting the encryption query to a further extent. Therefore, when data is outsourced, it is possible to reduce the load required for the retrieval processing while ensuring security.

In the above-mentioned example of the fourth embodiment, the encryption query is decrypted by acquiring the homomorphic function value F_{R}-Enc(*X*) from the user terminal 100 as the key for decrypting the encrypted encryption query, but the secret key may be acquired from the user terminal 100.

This invention is not limited to the embodiments described above, and encompasses various modification examples. For instance, the embodiments are described in detail for easier understanding of this invention, and this invention is not limited to modes that have all of the described components. Some components of one embodiment can be replaced with components of another embodiment, and components of one embodiment may be added to components of another embodiment. In each embodiment, other components may be added to, deleted from, or replace some components of the embodiment, and the addition, deletion, and the replacement may be applied alone or in combination.

Some of all of the components, functions, processing units, and processing means described above may be implemented by hardware by, for example, designing the components, the functions, and the like as an integrated circuit. The components, functions, and the like described above may also be implemented by software by a processor interpreting and executing programs that implement their respective functions. Programs, tables, files, and other types of information for implementing the functions can be put in a memory, in a storage apparatus such as a hard disk, or a solid state drive (SSD), or on a recording medium such as an IC card, an SD card, or a DVD.

The control lines and information lines described are lines that are deemed necessary for the description of this invention, and not all of control lines and information lines of a product are mentioned. In actuality, it can be considered that almost all components are coupled to one another.

## Claims

1. A method of retrieving an encrypted graph, which allows a first computer (100) comprising a processor (101) and a memory (103) to generate an encrypted graph by encrypting a graph including a start point (142), an edge (143), and an end point (144), and allows a second computer (200) comprising a processor (201) and a memory (203) to retrieve the encrypted graph, the method comprising:
a first step of generating, by the first computer (100), a secret key through use of a secret key generating function of a searchable encryption algorithm set in advance;
a second step of generating, by the first computer (100), the encrypted graph by encrypting the graph through use of an encryption function of the searchable encryption algorithm;
a third step of generating, by the first computer (100), an encryption query by encrypting a query for retrieving the graph through use of a searchable encryption query function of the searchable encryption algorithm;
a fourth step of transmitting, by the first computer (100), encrypted graph data obtained by associating the encrypted graph with the encryption query for each edge of the graph to the second computer (200);
a fifth step of transmitting, by the first computer (100), a searchable encryption matching function of the searchable encryption algorithm to the second computer (200);
a sixth step of receiving and storing, by the second computer (200), the encrypted graph data and the searchable encryption matching function;
a seventh step of generating, by the first computer (100), an encrypted graph retrieval query by encrypting the start point (142) and the end point (144) of the graph to be retrieved through the use of the searchable encryption query function, and transmitting the encrypted graph retrieval query to the second computer (200);
an eighth step of receiving, by the second computer (200), the encrypted graph retrieval query, and executing retrieval processing through use of the searchable encryption matching function with the encrypted graph retrieval query and the encrypted graph data being used as input; and
a ninth step of transmitting, by the second computer (200), a result of the retrieval processing to the first computer (100).

2. The method of retrieving an encrypted graph according to claim 1, wherein the third step comprises encrypting the encryption query through use of a second key.

3. The method of retrieving an encrypted graph according to claim 2, wherein:
the seventh step comprises transmitting a query execution key used for generating the second key; and
the eighth step comprises receiving the query execution key and calculating the second key.

4. The method of retrieving an encrypted graph according to claim 1, wherein:
the first step comprises generating a search key to be used as input for the searchable encryption matching function through the use of the secret key generating function of the searchable encryption algorithm;
the fifth step comprises transmitting the search key to the second computer (200); and
the eighth step comprises enabling the searchable encryption matching function to be used with the search key being used as the input.

5. The method of retrieving an encrypted graph according to claim 1, wherein:
the graph comprises a directed graph including a direction from the start point (142) toward the end point (144); and
the eighth step comprises:
detecting the end point (144) of the edge (143) including the start point (142) of the directed graph to be retrieved; and
detecting another edge (143) including the end point (144) set as the start point (142).

6. The method of retrieving an encrypted graph according to claim 5, wherein the eighth step further comprises:
outputting the edge (143) extending from the start point (142) to the end point (144) as a path when the end point (144) of the another edge (143) includes the end point (144) of the directed graph to be retrieved; and
retrieving further another edge (143) including the end point (144) of the another edge (143) set as the start point (142) when the end point (144) of the another edge (143) does not match the end point (144) of the directed graph to be retrieved.

7. The method of retrieving an encrypted graph according to claim 6, wherein the eighth step further comprises outputting one of a shortest path and a longest path as the result of the retrieval processing from among paths each formed of the edge (143) extending from the start point (142) to the end point (144) to be retrieved.

8. The method of retrieving an encrypted graph according to claim 6, wherein the eighth step further comprises outputting as the result of the retrieval processing whether or not the start point (142) and the end point (144) to be retrieved exist.

9. The method of retrieving an encrypted graph according to claim 1, wherein:
the seventh step comprises:
transmitting, by a third computer, the start point (142) and the end point (144) of the graph to be retrieved to the first computer (100);
receiving, by the first computer (100), the start point (142) and the end point (144) of the graph to be retrieved, generating the encrypted graph retrieval query by encrypting the start point (142) and the end point (144) that have been received through the use of the searchable encryption query function, and transmitting the encrypted graph retrieval query to the third computer; and
transmitting, by the third computer, the encrypted graph retrieval query that has been received to the second computer (200); and
the ninth step comprises transmitting, by the second computer (200), the result of the retrieval processing to the third computer.

10. The method of retrieving an encrypted graph according to claim 1, wherein:
the seventh step comprises:
transmitting, by a third computer, the start point (142) and the end point (144) of the graph to be retrieved to the first computer (100); and
receiving, by the first computer (100), the start point (142) and the end point (144) of the graph to be retrieved, generating the encrypted graph retrieval query by encrypting the start point (142) and the end point (144) that have been received through the use of the searchable encryption query function, and transmitting the encrypted graph retrieval query to the second computer (200); and
the ninth step comprises transmitting, by the second computer (200), the result of the retrieval processing to the third computer.

11. The method of retrieving an encrypted graph according to claim 9, wherein the second step comprises:
transmitting, by a fourth computer, the graph to the first computer (100); and
receiving, by the first computer (100), the graph, and generating the encrypted graph by encrypting the graph through the use of the encryption function of the searchable encryption algorithm.

12. A system for retrieving an encrypted graph, comprising:
a first computer (100), which comprises a processor (101) and a memory (103), and is configured to generate an encrypted graph by encrypting a graph including a start point (142), an edge (143), and an end point (144); and
a second computer (200), which comprises a processor (201) and a memory (203), and is configured to retrieve the encrypted graph,
the first computer (100) further comprising:
a secret key generation module (110) configured to generate a secret key through use of a secret key generating function of a searchable encryption algorithm set in advance;
an encrypted graph data generation module (120) configured to:
generate the encrypted graph by encrypting the graph through use of an encryption function of the searchable encryption algorithm;
generate an encryption query by encrypting a query for retrieving the graph through use of a searchable encryption query function of the searchable encryption algorithm; and
transmit encrypted graph data obtained by associating the encrypted graph with the encryption query for each edge (143) of the graph and a searchable encryption matching function of the searchable encryption algorithm to the second computer (200); and
an encrypted graph retrieval query generation module (130) configured to:
generate an encrypted graph retrieval query by encrypting the start point (142) and the end point (144) of the graph to be retrieved through the use of the searchable encryption query function; and
transmit the encrypted graph retrieval query to the second computer (200),
the second computer (200) further comprising an encrypted graph retrieval module (310) configured to:
receive and store the encrypted graph data and the searchable encryption matching function;
receive the encrypted graph retrieval query;
execute retrieval processing through use of the searchable encryption matching function with the encrypted graph retrieval query and the encrypted graph data being used as input; and
transmit a result of the retrieval processing to the first computer (100).

13. A computer (100, 200), comprising:
a processor (101, 201); and
a memory (103, 203) comprising:
encrypted graph data formed of a plurality of values obtained by encrypting respective values of a plurality of start points (142), edges (143), and end points (144) included in graph data through use of a first function of a searchable encryption algorithm; and
a plurality of encryption queries obtained by encrypting search queries of the respective values of the plurality of start points (142), edges (143), and end points (144) included in the graph data through use of a second function of the searchable encryption algorithm,
the encrypted graph data and the plurality of encryption queries being recorded in the memory (103, 203) in association with each other for each data set formed of a start point (142), an edge (143), and an end point (144).

14. The computer (100, 200) according to claim 13, wherein the processor (101, 201) is configured to:
identify, when receiving a first encryption query and a second encryption query used for retrieving the values of a predetermined start point (142) and a predetermined end point of an encrypted graph data, the value of the encrypted start point (142) including a plaintext that matches a plaintext of the first encryption query by searching the values of the plurality of encrypted start points (142) recorded in the memory (103, 203) by the first encryption query through use of a third function of the searchable encryption algorithm;
determine whether or not the plaintext of the value of the encrypted end point (144) recorded in association with the value of the encrypted start point (142) that has been identified matches the plaintext of the second encryption query through the use of the third function; and
searching, when determining that no match is achieved, the values of the plurality of encrypted start points (142) recorded in the memory (103, 203) by an encryption query of the end point (144) recorded in association with the value of the encrypted end point (144) through the use of the third function.

## Patentansprüche

1. Verfahren zum Wiedergewinnen einer verschlüsselten Graphik, das ermöglicht, dass ein erster Computer (100), der einen Prozessor (101) und einen Speicher (103) umfasst, durch Verschlüsseln einer Graphik, die einen Anfangspunkt (142), eine Kante (143) und einen Endpunkt (144) enthält, eine verschlüsselte Graphik erzeugt, und ermöglicht, dass ein zweiter Computer (200), der einen Prozessor (201) und einen Speicher (203) umfasst, die verschlüsselte Graphik wiedergewinnt, wobei das Verfahren Folgendes umfasst:
einen ersten Schritt des Erzeugens eines geheimen Schlüssels unter Verwendung einer Funktion zum Erzeugen eines geheimen Schlüssels eines durchsuchbaren Verschlüsselungsalgorithmus, der vorab eingestellt wird, durch den ersten Computer (100);
einen zweiten Schritt des Erzeugens der verschlüsselten Graphik durch Verschlüsseln der Graphik unter Verwendung einer Verschlüsselungsfunktion des durchsuchbaren Verschlüsselungsalgorithmus durch den ersten Computer (100);
einen dritten Schritt des Erzeugens einer Verschlüsselungsabfrage durch Verschlüsseln einer Abfrage zum Wiedergewinnen der Graphik unter Verwendung einer durchsuchbaren Verschlüsselungsabfragefunktion des durchsuchbaren Verschlüsselungsalgorithmus durch den ersten Computer (100);
einen vierten Schritt des Übertragens von verschlüsselten Graphikdaten, die durch Zuordnen der verschlüsselten Graphik zu der Verschlüsselungsabfrage für jede Kante der Graphik erhalten werden, durch den ersten Computer (100) an den zweiten Computer (200);
einen fünften Schritt des Übertragens einer durchsuchbaren Verschlüsselungsübereinstimmungsfunktion des durchsuchbaren Verschlüsselungsalgorithmus durch den ersten Computer (100) an den zweiten Computer (200);
einen sechsten Schritt des Empfangens und Speicherns der verschlüsselten Graphikdaten und der durchsuchbaren Verschlüsselungsübereinstimmungsfunktion durch den zweiten Computer (200);
einen siebten Schritt des Erzeugens einer Wiedergewinnungsabfrage für die verschlüsselte Graphik durch Verschlüsseln des Anfangspunktes (142) und des Endpunktes (144) der wiederzugewinnenden Graphik unter Verwendung der durchsuchbaren Verschlüsselungsabfragefunktion und des Übertragens der Wiedergewinnungsabfrage für die verschlüsselte Graphik an den zweiten Computer (200) durch den ersten Computer (100);
einen achten Schritt des Empfangens der Wiedergewinnungsabfrage für die verschlüsselte Graphik und des Ausführens einer Wiedergewinnungsverarbeitung unter Verwendung der durchsuchbaren Verschlüsselungsübereinstimmungsfunktion durch den zweiten Computer (200), wobei die Wiedergewinnungsabfrage für die verschlüsselte Graphik und die verschlüsselten Graphikdaten als Eingang verwendet werden; und
einen neunten Schritt des Übertragens eines Ergebnisses der Wiedergewinnungsverarbeitung durch den zweiten Computer (200) an den ersten Computer (100).

2. Verfahren des Wiedergewinnens einer verschlüsselten Graphik nach Anspruch 1, wobei der dritte Schritt das Verschlüsseln der Verschlüsselungsabfrage unter Verwendung eines zweiten Schlüssels umfasst.

3. Verfahren des Wiedergewinnens einer verschlüsselten Graphik nach Anspruch 2, wobei:
der siebte Schritt das Übertragen eines Abfrageausführungsschlüssels, der zum Erzeugen des zweiten Schlüssels verwendet wurde, umfasst; und
der achte Schritt das Empfangen des Abfrageausführungsschlüssels und das Berechnen des zweiten Schlüssels umfasst.

4. Verfahren des Wiedergewinnens einer verschlüsselten Graphik nach Anspruch 1, wobei:
der erste Schritt das Erzeugen eines Suchschlüssels, der als Eingang für die durchsuchbare Verschlüsselungsübereinstimmungsfunktion verwendet werden soll, unter Verwendung der Funktion zum Erzeugen eines geheimen Schlüssels des durchsuchbaren Verschlüsselungsalgorithmus umfasst;
der fünfte Schritt das Übertragen des Suchschlüssels an den zweiten Computer (200) umfasst; und
der achte Schritt das Aktivieren der durchsuchbaren Verschlüsselungsübereinstimmungsfunktion, die verwendet werden soll, umfasst, wobei der Suchschlüssel als der Eingang verwendet wird.

5. Verfahren des Wiedergewinnens einer verschlüsselten Graphik nach Anspruch 1, wobei:
die Graphik eine gerichtete Graphik umfasst, die eine Richtung vom Anfangspunkt (142) in Richtung des Endpunktes (144) enthält; und
der achte Schritt Folgendes umfasst:
Detektieren des Endpunktes (144) der Kante (143), die den Anfangspunkt (142) der wiederzugewinnenden, gerichteten Graphik enthält; und
Detektieren einer weiteren Kante (143), die den Endpunkt (144) enthält, der als der Anfangspunkt (142) eingestellt ist.

6. Verfahren des Wiedergewinnens einer verschlüsselten Graphik nach Anspruch 5, wobei der achte Schritt ferner Folgendes umfasst:
Ausgeben der Kante (143), die sich vom Anfangspunkt (142) zum Endpunkt (144) erstreckt, als einen Weg, wenn der Endpunkt (144) der weiteren Kante (143) den Endpunkt (144) der wiederzugewinnenden, gerichteten Graphik enthält; und
Wiedergewinnen einer nochmals weiteren Kante (143), die den Endpunkt (144) der weiteren Kante (143) enthält, der als der Startpunkt (142) eingestellt ist, wenn der Endpunkt (144) der weiteren Kante (143) nicht mit dem Endpunkt (144) der wiederzugewinnenden, gerichteten Graphik übereinstimmt.

7. Verfahren des Wiedergewinnens einer verschlüsselten Graphik nach Anspruch 6, wobei der achte Schritt ferner das Ausgeben entweder eines kürzesten Weges oder eines längsten Weges aus den Wegen, die jeweils aus der Kante (143) gebildet werden, die sich vom wiederzugewinnenden Anfangspunkt (142) zum wiederzugewinnenden Endpunkt (144) erstreckt, als das Ergebnis der Wiedergewinnungsverarbeitung umfasst.

8. Verfahren des Wiedergewinnens einer verschlüsselten Graphik nach Anspruch 6, wobei der achte Schritt ferner das Ausgeben, ob der wiederzugewinnende Anfangspunkt (142) und der wiederzugewinnende Endpunkt (144) vorhanden sind oder nicht, als das Ergebnis der Wiedergewinnungsverarbeitung umfasst.

9. Verfahren des Wiedergewinnens einer verschlüsselten Graphik nach Anspruch 1, wobei:
der siebte Schritt Folgendes umfasst:
Übertragen des Anfangspunktes (142) und des Endpunktes (144) der wiederzugewinnenden Graphik durch einen dritten Computer an den ersten Computer (100);
Empfangen des Anfangspunktes (142) und des Endpunktes (144) der wiederzugewinnenden Graphik, Erzeugen der Wiedergewinnungsabfrage für die verschlüsselte Graphik durch Verschlüsseln des Anfangspunktes (142) und des Endpunktes (144), die empfangen worden sind, unter Verwendung der durchsuchbaren Verschlüsselungsabfragefunktion und Übertragen der Wiedergewinnungsabfrage für die verschlüsselte Graphik an den dritten Computer durch den ersten Computer (100); und
Übertragen der Wiedergewinnungsabfrage für die verschlüsselte Graphik, die empfangen worden ist, durch den dritten Computer an den zweiten Computer (200); und
der neunte Schritt das Übertragen des Ergebnisses der Wiedergewinnungsverarbeitung durch den zweiten Computer (200) an den dritten Computer umfasst.

10. Verfahren des Wiedergewinnens einer verschlüsselten Graphik nach Anspruch 1, wobei:
der siebte Schritt Folgendes umfasst:
Übertragen des Anfangspunktes (142) und des Endpunktes (144) der wiederzugewinnenden Graphik durch einen dritten Computer an den ersten Computer (100); und
Empfangen des Anfangspunktes (142) und des Endpunktes (144) der wiederzugewinnenden Graphik, Erzeugen der Wiedergewinnungsabfrage für die verschlüsselte Graphik durch Verschlüsseln des Anfangspunktes (142) und des Endpunktes (144), die empfangen worden sind, unter Verwendung der durchsuchbaren Verschlüsselungsabfragefunktion und Übertragen der Wiedergewinnungsabfrage für die verschlüsselte Graphik an den zweiten Computer (200) durch den ersten Computer (100); und
der neunte Schritt das Übertragen des Ergebnisses der Wiedergewinnungsverarbeitung durch den zweiten Computer (200) an den dritten Computer umfasst.

11. Verfahren des Wiedergewinnens einer verschlüsselten Graphik nach Anspruch 9, wobei der zweite Schritt Folgendes umfasst:
Übertragen der Graphik durch einen vierten Computer an den ersten Computer (100); und
Empfangen der Graphik und Erzeugen der verschlüsselten Graphik durch Verschlüsseln der Graphik unter Verwendung der Verschlüsselungsfunktion des durchsuchbaren Verschlüsselungsalgorithmus durch den ersten Computer (100).

12. System zum Wiedergewinnen einer verschlüsselten Graphik, das Folgendes umfasst:
einen ersten Computer (100), der einen Prozessor (101) und einen Speicher (103) umfasst und konfiguriert ist, durch Verschlüsseln einer Graphik, die einen Anfangspunkt (142), eine Kante (143) und einen Endpunkt (144) enthält, eine verschlüsselte Graphik zu erzeugen; und
einen zweiten Computer (200), der einen Prozessor (201) und einen Speicher (203) umfasst und konfiguriert ist, die verschlüsselte Graphik wiederzugewinnen,
wobei der erste Computer (100) ferner Folgendes umfasst:
ein Modul (110) zum Erzeugen eines geheimen Schlüssels, das konfiguriert ist, unter Verwendung einer Funktion zum Erzeugen eines geheimen Schlüssels eines durchsuchbaren Verschlüsselungsalgorithmus, der vorab eingestellt wird, einen geheimen Schlüssel zu erzeugen;
ein Modul (120) zum Erzeugen von verschlüsselten Graphikdaten, das konfiguriert ist:
die verschlüsselte Graphik durch Verschlüsseln der Graphik unter Verwendung einer Verschlüsselungsfunktion des durchsuchbaren Verschlüsselungsalgorithmus zu erzeugen;
eine Verschlüsselungsabfrage durch Verschlüsseln einer Abfrage zum Wiedergewinnen der Graphik unter Verwendung einer durchsuchbaren Verschlüsselungsabfragefunktion des durchsuchbaren Verschlüsselungsalgorithmus zu erzeugen; und
verschlüsselte Graphikdaten, die durch Zuordnen der verschlüsselten Graphik zu der Verschlüsselungsabfrage für jede Kante (143) der Graphik erhalten werden, und eine durchsuchbare Verschlüsselungsübereinstimmungsfunktion des durchsuchbaren Verschlüsselungsalgorithmus an den zweiten Computer (200) zu übertragen; und
ein Modul (130) zum Erzeugen einer Wiedergewinnungsabfrage für die verschlüsselte Graphik, das konfiguriert ist:
eine Wiedergewinnungsabfrage für die verschlüsselte Graphik durch Verschlüsseln des Anfangspunktes (142) und des Endpunktes (144) der wiederzugewinnenden Graphik unter Verwendung der durchsuchbaren Verschlüsselungsabfragefunktion zu erzeugen; und
die Wiedergewinnungsabfrage für die verschlüsselte Graphik an den zweiten Computer (200) zu übertragen,
wobei der zweite Computer (200) ferner ein Modul (310) zum Wiedergewinnen einer verschlüsselten Graphik umfasst, das konfiguriert ist:
die verschlüsselten Graphikdaten und die durchsuchbare Verschlüsselungsübereinstimmungsfunktion zu empfangen und zu speichern;
die Wiedergewinnungsabfrage für die verschlüsselte Graphik zu empfangen;
eine Wiedergewinnungsverarbeitung unter Verwendung der durchsuchbaren Verschlüsselungsübereinstimmungsfunktion auszuführen, wobei die Wiedergewinnungsabfrage für die verschlüsselte Graphik und die verschlüsselten Graphikdaten als Eingang verwendet werden; und
ein Ergebnis der Wiedergewinnungsverarbeitung an den ersten Computer (100) zu übertragen.

13. Computer (100, 200), der Folgendes umfasst:
einen Prozessor (101, 201); und
einen Speicher (103, 203), der Folgendes umfasst:
verschlüsselte Graphikdaten, die aus mehreren Werten gebildet sind, die durch Verschlüsseln der jeweiligen Werte von mehreren Anfangspunkten (142), Kanten (143) und Endpunkten (144), die in Graphikdaten enthalten sind, unter Verwendung einer ersten Funktion eines durchsuchbaren Verschlüsselungsalgorithmus erhalten werden; und
mehrere Verschlüsselungsabfragen, die durch Verschlüsseln von Suchabfragen der entsprechenden Werte der mehreren Anfangspunkte (142), Kanten (143) und Endpunkte (144), die in den Graphikdaten enthalten sind, unter Verwendung einer zweiten Funktion des durchsuchbaren Verschlüsselungsalgorithmus erhalten werden,
wobei die verschlüsselten Graphikdaten und die mehreren Verschlüsselungsabfragen für jede Datengruppe, die aus einem Anfangspunkt (142), einer Kante (143) und einem Endpunkt (144) gebildet ist, in Zuordnung zueinander im Speicher (103, 203) aufgezeichnet sind.

14. Computer (100, 200) nach Anspruch 13, wobei der Prozessor (101, 201) konfiguriert ist:
dann, wenn eine erste Verschlüsselungsabfrage und eine zweite Verschlüsselungsabfrage empfangen werden, die zum Wiedergewinnen der Werte eines vorgegebenen Anfangspunktes (142) und eines vorgegebenen Endpunktes von Daten einer verschlüsselten Graphik verwendet werden, den Wert des verschlüsselten Anfangspunktes (142) zu identifizieren, der einen Klartext enthält, der mit einem Klartext der ersten Verschlüsselungsabfrage übereinstimmt, indem die Werte der mehreren verschlüsselten Anfangspunkte (142), die im Speicher (103, 203) aufgezeichnet sind, durch die erste Verschlüsselungsabfrage unter Verwendung einer dritten Funktion des durchsuchbaren Verschlüsselungsalgorithmus durchsucht werden;
unter Verwendung der dritten Funktion zu bestimmen, ob der Klartext des Wertes des verschlüsselten Endpunktes (144), der in Zuordnung zu dem Wert des verschlüsselten Anfangspunktes (142), der identifiziert worden ist, aufgezeichnet ist, mit dem Klartext der zweiten Verschlüsselungsabfrage übereinstimmt oder nicht; und
dann, wenn bestimmt wird, dass keine Übereinstimmung erreicht wird, die Werte der mehreren verschlüsselten Anfangspunkte (142), die im Speicher (103, 203) aufgezeichnet sind, durch eine Verschlüsselungsabfrage des Endpunktes (144), der in Zuordnung zu dem Wert des verschlüsselten Endpunktes (144) aufgezeichnet ist, unter Verwendung der dritten Funktion zu durchsuchen.

## Revendications

1. Procédé de récupération d'un graphique crypté, qui permet à un premier ordinateur (100) comprenant un processeur (101) et une mémoire (103) de générer un graphique crypté en cryptant un graphique incluant un point de départ (142), une arête (143) et un point final (144), et permet à un deuxième ordinateur (200) comprenant un processeur (201) et une mémoire (203) de récupérer le graphique crypté, le procédé comprenant :
une première étape consistant à générer, par le premier ordinateur (100), une clé secrète par utilisation d'une fonction de génération de clé secrète d'un algorithme de cryptage interrogeable défini à l'avance ;
une deuxième étape consistant à générer, par le premier ordinateur (100), le graphique crypté en cryptant le graphique par utilisation d'une fonction de cryptage de l'algorithme de cryptage interrogeable ;
une troisième étape consistant à générer, par le premier ordinateur (100), une requête de cryptage en cryptant une requête pour récupérer le graphique par utilisation d'une fonction de requête de cryptage interrogeable de l'algorithme de cryptage interrogeable ;
une quatrième étape consistant à transmettre, par le premier ordinateur (100), des données de graphique crypté obtenues en associant le graphique crypté à la requête de cryptage pour chaque arête du graphique au deuxième ordinateur (200) ;
une cinquième étape consistant à transmettre, par le premier ordinateur (100), une fonction de correspondance de cryptage interrogeable de l'algorithme de cryptage interrogeable au deuxième ordinateur (200) ;
une sixième étape consistant à recevoir et stocker, par le deuxième ordinateur (200), les données de graphique crypté et la fonction de correspondance de cryptage interrogeable ;
une septième étape consistant à générer, par le premier ordinateur (100), une requête de récupération de graphique crypté en cryptant le point de départ (142) et le point final (144) du graphique à récupérer par utilisation de la fonction de requête de cryptage interrogeable, et à transmettre la requête de récupération de graphique crypté au deuxième ordinateur (200) ;
une huitième étape consistant à recevoir, par le deuxième ordinateur (200), la requête de récupération de graphique crypté, et à exécuter le traitement de récupération par utilisation de la fonction de correspondance de cryptage interrogeable avec la requête de récupération de graphique crypté et les données de graphique crypté utilisées comme entrée ; et
une neuvième étape consistant à transmettre, par le deuxième ordinateur (200), un résultat du traitement de récupération au premier ordinateur (100).

2. Procédé de récupération d'un graphique crypté selon la revendication 1, dans lequel la troisième étape consiste à crypter la requête de cryptage par utilisation d'une deuxième clé.

3. Procédé de récupération d'un graphique crypté selon la revendication 2, dans lequel :
la septième étape consiste à transmettre une clé d'exécution de requête utilisée pour générer la deuxième clé ; et
la huitième étape consiste à recevoir la clé d'exécution de requête et à calculer la deuxième clé.

4. Procédé de récupération d'un graphique crypté selon la revendication 1, dans lequel :
la première étape consiste à générer une clé de recherche à utiliser comme entrée pour la fonction de correspondance de cryptage interrogeable par utilisation de la fonction de génération de clé secrète de l'algorithme de cryptage interrogeable ;
la cinquième étape consiste à transmettre la clé de recherche au deuxième ordinateur (200) ; et
la huitième étape consiste à autoriser l'utilisation de la fonction de correspondance de cryptage interrogeable avec la clé de recherche utilisée comme entrée.

5. Procédé de récupération d'un graphique crypté selon la revendication 1, dans lequel :
le graphique comprend un graphique orienté incluant une direction allant du point de départ (142) vers le point final (144) ; et
la huitième étape comprend les étapes consistant à :
détecter le point final (144) de l'arête (143) incluant le point de départ (142) du graphique orienté à récupérer ; et
détecter une autre arête (143) incluant le point final (144) défini comme point de départ (142).

6. Procédé de récupération d'un graphique crypté selon la revendication 5, dans lequel la huitième étape comprend en outre les étapes consistant à :
délivrer l'arête (143) s'étendant du point de départ (142) au point final (144) en tant que chemin lorsque le point final (144) de l'autre arête (143) inclut le point final (144) du graphique orienté à récupérer ; et
récupérer encore une autre arête (143) incluant le point final (144) de l'autre arête (143) défini comme point de départ (142) lorsque le point final (144) de l'autre arête (143) ne correspond pas au point final (144) du graphique orienté à récupérer.

7. Procédé de récupération d'un graphique crypté selon la revendication 6, dans lequel la huitième étape consiste en outre à délivrer un chemin parmi un chemin le plus court et un chemin le plus long comme résultat du traitement de récupération parmi des chemins formés chacun de l'arête (143) s'étendant du point de départ (142) au point final (144) à récupérer.

8. Procédé de récupération d'un graphique crypté selon la revendication 6, dans lequel la huitième étape consiste en outre à délivrer, comme résultat du traitement de récupération, l'existence ou non du point de départ (142) et du point final (144) à récupérer.

9. Procédé de récupération d'un graphique crypté selon la revendication 1, dans lequel :
la septième étape comprend les étapes consistant à :
transmettre, par un troisième ordinateur, le point de départ (142) et le point final (144) du graphique à récupérer au premier ordinateur (100) ;
recevoir, par le premier ordinateur (100), le point de départ (142) et le point final (144) du graphique à récupérer, générer la requête de récupération de graphique crypté en cryptant le point de départ (142) et le point final (144) qui ont été reçus par utilisation de la fonction de requête de cryptage interrogeable, et transmettre la requête de récupération de graphique crypté au troisième ordinateur ; et
transmettre, par le troisième ordinateur, la requête de récupération de graphique crypté qui a été reçue au deuxième ordinateur (200) ; et
la neuvième étape consiste à transmettre, par le deuxième ordinateur (200), le résultat du traitement de récupération au troisième ordinateur.

10. Procédé de récupération d'un graphique crypté selon la revendication 1, dans lequel :
la septième étape comprend les étapes consistant à :
transmettre, par un troisième ordinateur, le point de départ (142) et le point final (144) du graphique à récupérer au premier ordinateur (100) ; et
recevoir, par le premier ordinateur (100), le point de départ (142) et le point final (144) du graphique à récupérer, générer la requête de récupération de graphique crypté en cryptant le point de départ (142) et le point final (144) qui ont été reçus par utilisation de la fonction de requête de cryptage interrogeable, et transmettre la requête de récupération de graphique crypté au deuxième ordinateur (200) ; et
la neuvième étape consiste à transmettre, par le deuxième ordinateur (200), le résultat du traitement de récupération au troisième ordinateur.

11. Procédé de récupération d'un graphique crypté selon la revendication 9, dans lequel la deuxième étape comprend les étapes consistant à :
transmettre, par un quatrième ordinateur, le graphique au premier ordinateur (100) ; et
recevoir, par le premier ordinateur (100), le graphique, et générer le graphique crypté en cryptant le graphique par utilisation de la fonction de cryptage de l'algorithme de cryptage interrogeable.

12. Système pour récupérer un graphique crypté, comprenant :
un premier ordinateur (100) qui comprend un processeur (101) et une mémoire (103) et qui est configuré pour générer un graphique crypté en cryptant un graphique incluant un point de départ (142), une arête (143) et un point final (144) ; et
un deuxième ordinateur (200) qui comprend un processeur (201) et une mémoire (203) et qui est configuré pour récupérer le graphique crypté,
le premier ordinateur (100) comprenant en outre :
un module de génération de clé secrète (110) configuré pour générer une clé secrète par utilisation d'une fonction de génération de clé secrète d'un algorithme de cryptage interrogeable défini à l'avance ;
un module de génération de données de graphique crypté (120) configuré pour :
générer le graphique crypté en cryptant le graphique par utilisation d'une fonction de cryptage de l'algorithme de cryptage interrogeable ;
générer une requête de cryptage en cryptant une requête pour récupérer le graphique par utilisation d'une fonction de requête de cryptage interrogeable de l'algorithme de cryptage interrogeable ; et
transmettre des données de graphique crypté obtenues en associant le graphique crypté à la requête de cryptage pour chaque arête (143) du graphique et une fonction de correspondance de cryptage interrogeable de l'algorithme de cryptage interrogeable au deuxième ordinateur (200) ; et
un module de génération de requête de récupération de graphique crypté (130) configuré pour :
générer une requête de récupération de graphique crypté en cryptant le point de départ (142) et le point final (144) du graphique à récupérer par utilisation de la fonction de requête de cryptage interrogeable ; et
transmettre la requête de récupération de graphique crypté au deuxième ordinateur (200),
le deuxième ordinateur (200) comprenant en outre un module de récupération de graphique crypté (310) configuré pour :
recevoir et stocker les données de graphique crypté et la fonction de correspondance de cryptage interrogeable ;
recevoir la requête de récupération de graphique crypté ;
exécuter le traitement de récupération par utilisation de la fonction de correspondance de cryptage interrogeable avec la requête de récupération de graphique crypté et les données de graphique crypté utilisées comme entrée ; et
transmettre un résultat du traitement de récupération au premier ordinateur (100).

13. Ordinateur (100, 200), comprenant :
un processeur (101, 201) ; et
une mémoire (103, 203) comprenant :
des données de graphique crypté formées d'une pluralité de valeurs obtenues en cryptant des valeurs respectives d'une pluralité de points de départ (142), d'arêtes (143) et de points finaux (144) inclus dans des données de graphique par utilisation d'une première fonction d'un algorithme de cryptage interrogeable ; et
une pluralité de requêtes de cryptage obtenues en cryptant des requêtes de recherche des valeurs respectives de la pluralité de points de départ (142), d'arêtes (143) et de points finaux (144) inclus dans les données de graphique par utilisation d'une deuxième fonction de l'algorithme de cryptage interrogeable,
les données de graphique crypté et la pluralité de requêtes de cryptage étant enregistrées dans la mémoire (103, 203) en association entre elles pour chaque ensemble de données formé d'un point de départ (142), d'une arête (143) et d'un point final (144).

14. Ordinateur (100, 200) selon la revendication 13, dans lequel le processeur (101, 201) est configuré pour :
identifier, lors de la réception d'une première requête de cryptage et d'une deuxième requête de cryptage utilisées pour récupérer les valeurs d'un point de départ prédéterminé (142) et d'un point final prédéterminé d'une donnée de graphique crypté, la valeur du point de départ crypté (142) incluant un texte en clair qui correspond à un texte en clair de la première requête de cryptage en recherchant les valeurs de la pluralité de points de départ cryptés (142) enregistrés dans la mémoire (103, 203) par la première requête de cryptage par utilisation d'une troisième fonction de l'algorithme de cryptage interrogeable ;
déterminer si le texte en clair de la valeur du point final crypté (144) enregistré en association avec la valeur du point de départ crypté (142) qui a été identifiée correspond ou non au texte en clair de la deuxième requête de cryptage par utilisation de la troisième fonction ; et
rechercher, lorsqu'il est déterminé qu'aucune correspondance n'est obtenue, les valeurs de la pluralité de points de départ cryptés (142) enregistrés dans la mémoire (103, 203) par une requête de cryptage du point final (144) enregistré en association avec la valeur du point final crypté (144) par utilisation de la troisième fonction.
